# EUROPEAN PATENT APPLICATION

(11) **EP 1 396 992 A2**
(43) Date of publication of application: **10.03.2004**
(21) Application number: 03255077.4
(22) Date of filing: 15.08.2003
(51) Int. Cl.: H04N 1/00, H04N 1/32

(54) **Image forming apparatus that can operate without wasteful use of resources thereof and unnecessary authentication**

(30) Priority: 15.08.2002 JP 2002236990; 19.09.2002 JP 2002273986; 19.09.2002 JP 2002273987; 12.08.2003 JP 2003292494; 12.08.2003 JP 2003292495; 12.08.2003 JP 2003292496; 12.08.2003 JP 2003292497
(71) Applicant: Ricoh Company Ltd., Tokyo 143-8555 (JP)
(72) Inventor: Mihira, Sachiko, Yokohama-shi Kanagawa (JP); Nakamura, Takashi, Yokohama-shi Kanagawa (JP)
(74) Representative: Leeming, John Gerard

(57) **Abstract**

An image forming apparatus, method and system are disclosed, for acquiring a store document in the image forming apparatus and generating access authentication information. - The image forming apparatus can operate without wasteful use of resources thereof and unnecessary authentication. In the image forming apparatus, in response to an authentication request for a stored document therein from an external network device, first session information of a first session established within the image forming apparatus is acquired, the first session information is associated with second session information of a second session established between the network device and the image forming apparatus, and the second session information is sent to the network device. Then , in response to receipt of a predetermined process request using the second- session information from te network device, the first session information corresponding to the second session information is identified, and the first session information is used to fulfill the predetermined process request on the stored document.

## Description

The present invention generally relates to an image forming apparatus that can operate without wasteful use of resources thereof and unnecessary authentication.

In recent years, multifunction type image forming apparatuses, which are called "multifunctional machines", have been widely recognized. Such a multifunctional machine integrally accommodates individual functions of a printer, a copier, a facsimile and a scanner in a housing thereof. Typically, a multifunctional machine not only includes a displaying part, a printing part and an image forming part but also contains four types of software items, each of which corresponds to a printer, a copier, a facsimile and a scanner, respectively. By using these software items selectively, the multifunctional machine can perform each of a printer function, a copier function, a fax function and a scanner function.

In general, such a multifunctional machine maintains document files, which are referred to as "stored documents", in document storage means thereof such as a document management database (DB). The multifunctional machine is connected to external network devices and other multifunctional machines via a network, and sends a stored document in a document management DB thereof in accordance with an instruction received from an external network device. In addition, such a multifunctional machine often issues a password for each stored document stored in a document management DB thereof for security measures.

In order to request a stored document in a document management DB in a multifunction machine, for example, a network device sends to the multifunctional machine both a document ID and a password corresponding to the stored document to the multifunctional machine. In this case, the document ID is used to identify the requested stored document, and the password is used to identify accessibility to the stored document. If the password is successfully authorized, the multifunctional machine reads the stored document corresponding to the received document ID from the document management DB and then sends the read stored document to the network device that has requested this stored document.

Conventionally, such a network device provides an acquisition request for a stored document to a multifunctional machine through a browser or the like. Japanese Laid-Open Patent Application 2002-084383 discloses a multifunctional machine that can operate in the above-mentioned fashion.

However, such a conventional multifunctional machine is configured to receive various process requests for a stored document, such as an output request and an acquisition request, from a network device or another multifunctional machine. In this configuration, the conventional multifunctional machine has to contain various user service processes corresponding to such process requests.

Accordingly, if a password is assigned to a stored document, the multifunctional machine needs to a number of password authentication functions corresponding to various user service processes bacause one password authentication function is requested for each user service process. In this case, the conventional multifunctional machine has a problem of duplication of such password authentication functions.

In addition, when a conventional multifunctional machine performs a plurality of user service processes on a stored document in a document management DB thereof, the stored document itself is directly transmitted among the user service processes. In this case, there is a risk that resources of the multifunctional machine and network resources may be wastefully used.

Furthermore, for example, such a multifunctional machine is connected to a network device via a network and executes a predetermined process based on the network device. For example, if a multifunctional machine maintains a document file as a stored document in a document management DB, the multifunctional machine outputs a stored document in the document management DB based on a network device. By using an output function (print process), the multifunctional machine often outputs the stored document. Such a multifunctional machine often sets a password for each user using a stored document in a document management DB or a service offered to a network device.

In order to request a service offered by a multifunctional machine, a network device sends to the multifunctional machine a user ID to identify a user that will receive a desired service and a password to verify access authority of the desired service. After completion of the password authentication, the multifunctional machine offers the service to the network device.

Additionally, if a multifunctional machine outputs a stored document in a document management DB, a network device sends to the multifunctional machine a document ID to identify the stored document and a password to verify access authority to the stored document. After completion of password authentication, the multifunctional machine reads the stored document corresponding to the document ID from the document management DB and outputs the stored document. Japanese Laid-Open Patent Application No. 2002-084383 discloses such a multifunctional machine.

In addition, if a password has to be authenticated for each user using a service offered by a multifunctional machine, it is necessary to repeat the same authentication in order to for the user to repeatedly utilize the same service. Similarly, if a password is assigned for each document stored in a document management DB of a multifunctional machine, it is necessary to repeat the same authentication so as to repeatedly output the same document. In these cases, it is required to repeat the same authentication for the same process several times.

In addition, secret information such as a user ID, a document ID, a password and access authentication information is communicated between a multifunctional machine and a network device via a network. Thus, it is necessary to enhance network security.

It is a general object of the present invention to provide an image forming apparatus, method and system of acquiring a stored document in which one or more of the above-mentioned problems are eliminated.

A first more specific object of the present invention is to provide an image forming apparatus that can have a shared authentication function for a stored document and can offer the stored document without wasteful use of network resources and system resources.

A second more specific object of the present invention is to provide method and system of acquiring a stored document for such an image forming apparatus.

A third more specific object of the present invention is to provide an image forming apparatus that can reduce unnecessary authentication and enhance network security.

A fourth more specific object of the present invention is to provide method and system of generating access authentication information for such an image forming apparatus.

In order to achieve the above-mentioned objects, there is provided according to one aspect of the present invention an image forming apparatus, including: a hardware set being used for image formation; a program being executed for image formation; document storage means for storing at least one document; a network service; and a document management service, wherein the network service, in response to receipt of an authentication request for a stored document in the document storage means from an external network device, acquires first session information, which is created by the document management service, of a first session established between the network service and the document management service from the document management service, associates the first session information with second session information of a second session established between the network service and the network device, and sends the second session information to the network device, whereas the network service, in response to receipt of a predetermined process request using the second session information from the network device, identifies the first session information corresponding to the second session information, and uses the first session information to fulfill the predetermined process request on the stored document.

In an embodiment of the present invention, the network service, in response to receipt of a stored document acquisition request using the second session information from the network device, may identify the first session information corresponding to the second session information, use the first session information to acquire the stored document corresponding to the stored document acquisition request from the document storage means, and send the acquired stored document to the network device.

In an embodiment of the present invention, the network service, in response to receipt of a stored document acquisition request using the second session information from the network device, may identify the first session information corresponding to the second session information, use the first session information to acquire the stored document corresponding to the stored document acquisition request from the document management service, and send the acquired stored document to the network device.

In an embodiment of the present invention, the network service, in response to receipt of a stored document acquisition request using the second session information from the network device, may identify the first session information corresponding to the second session information, and use the first session information to cause the document management service to acquire the stored document corresponding to the stored document acquisition request and to send the acquired stored document to the network device.

In an embodiment of the present invention, the first session information may be used within the image forming apparatus.

In an embodiment of the present invention, the hardware set may include: scanner means for generating image data from an image; and plotter means for forming an image from image data.

In an embodiment of the present invention, the network service may include the second session information in display data that the network device uses to create a stored document acquisition screen, and send the display data to the network device.

In an embodiment of the present invention, the document management service, in response to receipt of the authentication request from the network service, performs authentication, may create the first session information based on a result of the authentication, and send the created first session information to the network service.

In an embodiment of the present invention, the document management service, in response to receipt of the first session information from the network service, may determine validity of the first session information.

In an embodiment of the present invention, the network service may fulfill the predetermined process request on the stored document based on the determined validity of the first session information.

In an embodiment of the present invention, the network service may include the second session information in Web page data that the network device uses to create a Web page for acquiring the stored document, and send the Web page data to the network device.

In an embodiment of the present invention, the stored document acquisition request may include the second session information, stored document identification information and document acquirable range information.

In an embodiment of the present invention, the document acquirable range information may include a format and a page number of the stored document.

In an embodiment of the present invention, the display data may include the second session information, stored document identification information and document acquirable range information.

In an embodiment of the present invention, the document acquirable range information may include a format and a page number of the stored document.

In an embodiment of the present invention, the first session information may be replaced with access authentication information of the stored document.

In an embodiment of the present invention, the document management service may invalidate the first session information after a predetermined time has passed since creation of the first session information.

Additionally, there is provided according to another aspect of the present invention a method of acquiring a stored document for an image forming apparatus having a hardware set used for image formation, a program executed for image formation, and document storage means for storing at least one document, the method including the steps of: acquiring, in response to an authentication request for a stored document in the document storage means from an external network device, first session information of a first session established within the image forming apparatus; associating the first session information with second session information of a second session established between the network device and the image forming apparatus, and sending the second session information to the network device; identifying, in response to receipt of a predetermined process request using the second session information from the network device, the first session information corresponding to the second session information; and using the first session information to fulfill the predetermined process request on the stored document.

Additionally, there is provided according to another aspect of the present invention a system of acquiring a stored document, including: at least one external network device being connected to a network; and an image forming apparatus being connected to the at least one network device via the network, the image forming apparatus including: document storage means for storing at least one document; a network service; and a document management service, wherein the network service, in response to receipt of an authentication request for a stored document in the document storage means from an external network device, acquires first session information of a first session established within the . image forming apparatus, associates the first session information with second session information of a second session established between the image forming apparatus and the network device, and sends the second session information to the network device, whereas the network service, in response to receipt of a predetermined process request using the second session information from the network device, identifies the first session information corresponding to the second session information, and uses the first session information to fulfill the predetermined process request on the stored document, and the document management service, in response to the authentication request, creates the first session information of the first session established within the image forming apparatus, and sends the created first session information to the network service.

Additionally, there is provided according to another aspect of the present invention a method of acquiring a stored document for a system including: at least one external network device being connected to a network; and an image forming apparatus being connected to the at least one network device via the network, the image forming apparatus having document storage means for storing at least one document, the method including: a first step of acquiring, in response to receipt of an authentication request for a stored document in the document storage means from an external network device, first session information of a first session established within the image forming apparatus; a second step of associating the first session information with second session information of a second session established between the image forming apparatus and the network device, and sending the second session information to the network device; a third step of identifying, in response to receipt of a predetermined process request using the second session information from the network device, the first session information corresponding to the second session information; and a fourth step of using the first session information to fulfill the predetermined process request on the stored document.

In an embodiment of the present invention, the image forming apparatus may perform the first step, the second step, the third step and the fourth step.

According to one aspect of the present invention, it is possible to provide an image forming apparatus that includes a shared authentication function for stored document therein. Additionally, the image forming apparatus makes it possible to prevent wasteful use of resources thereof and network resources and enhance secrecy toward the exterior thereof.

According to one aspect of the present invention, it is possible to provide method and system of acquiring a stored document for an image forming apparatus.

Additionally, there is provided according to another aspect of the present invention an image forming apparatus, including: a hardware set being used for image formation; a program being executed for image formation; document storage means for storing at least one document; a network service; and a document management service, wherein the network service, in response to receipt of an authentication request for a stored document in the document storage means from an external network device, acquires session information of a session established between the network service and the document management service, includes the session information in display data that the network device uses to create a stored document acquisition screen, and sends the display data including the session information to the network device, whereas the network service, in response to receipt of a predetermined process request using the session information for the stored document from the network device, uses the session information to fulfill the predetermined process request on the stored document.

In an embodiment of the present invention, the network service, in response to receipt of a stored document acquisition request using the session information from the network device after transmission of the session information in the display data to the network device, may use the session information to acquire a stored document corresponding to the stored document acquisition request from the document storage. means, and send the acquired stored document to the network device.

In an embodiment of the present invention, the network service, in response to receipt of an authentication request for a stored document in the document storage means from network device, performs authentication corresponding to the authentication request, may create session content information and session identification information based on a result of the authentication, include the session identification information in the display data, and send the display data including the session identification information to the network device.

In an embodiment of the present invention, the network service, in response to receipt of a predetermined process request using the session identification information for a stored document in the document storage means from the network device, may identify the session content information corresponding to the session identification information, and use the session content information to fulfill the predetermined process request on the stored document.

In an embodiment of the present invention, the network service, in response to receipt of the predetermined process request using the session identification information for the stored document in the document storage means from the network device, may identify the session content information corresponding to the session identification information, and determine whether or not the predetermined process request is valid for the stored document based on the session content information.

In an embodiment of the present invention, the predetermined process request may include session information, stored document identification information and document acquirable range information.

In an embodiment of the present invention, the document acquirable range information may include a format and a page number of the stored document.

In an embodiment of the present invention, the display data may include session information, stored document identification information and document acquirable range information.

In an embodiment of the present invention, the document acquirable range information may include a format and a page number of the stored document.

In an embodiment of the present invention, the session information may be invalidated after a predetermined time has passed since creation of the session information.

In an embodiment of the present invention, the hardware set may include: scanner means for generating image data from an image; and plotter means for forming an image from image data.

In an embodiment of the present invention, the network service may include the session information in Web page data that the network device uses to create a Web page for processing a stored document, and send the Web page data to the network device.

In an embodiment of the present invention, the Web page data may be described in accordance with HTML (Hypertext Markup Language).

Additionally, there is provided according to another aspect of the present invention, an image forming apparatus, including: a hardware set being used for image formation; a program being executed for image formation; document storage means for storing at least one document; a network service; and a document management service, wherein the network service, in response to receipt of an authentication request for a stored document in the document storage means and document acquisition condition information thereon from an external network device, acquires session information of a session established within the image forming apparatus, and uses the session information and the document acquisition condition to fulfill a predetermined process request on the stored document.

Additionally, there is provided according to another aspect of the present invention a method of processing a stored document for an image forming apparatus having a hardware set used for image formation, a program executed for image formation, and document storage means for storing at least one document, the method including the steps of: acquiring, in response to receipt of an authentication request for a stored document in the document storage means from an external network device, session information of a session established within the image forming apparatus, including the session information in display data that the network device uses to create a stored document processing screen, and sending the display data to the network device; and using, in response to receipt of a predetermined process request using the session information for the stored document from the network device, the session information to fulfill the predetermined process request on the stored document.

Additionally, there is provided according to another aspect of the present invention a method of processing a stored document for an image forming apparatus having a hardware set used for image formation, a program executed for image formation, and document storage means for storing at least one document, the method including the steps of: acquiring, in response to receipt of an authentication request for a stored document in the document storage means and document acquisition condition information thereon from an external network device, session information of a session established within the image forming apparatus; and using the session information and the document acquisition condition to fulfill the predetermined process request on the stored document.

Additionally, there is provided according to another aspect of the present invention a system of processing a stored document, including: at least one external network device being connected to a network; and an image forming apparatus being connected to the at least one network device via the network, the image forming apparatus including: a hardware set used for image formation, a program executed for image formation, and document storage means for storing at least one document, wherein the image forming apparatus, in response to receipt of an authentication request for a stored document in the document storage means from an external network device, acquires session information of a session established within the image forming apparatus, includes the session information in display data that the network device uses to create a stored document processing screen, and sends the display data to the network device; the network device acquires the session information from the received display data, and sends a predetermined process request using the session information to the image forming apparatus in accordance with a user's instruction; and the image forming apparatus, in response to receipt of the predetermined process request using the session information from the network device, uses the session information to fulfill the predetermined process request on the stored document.

Additionally, there is provided according to another aspect of the present invention a system of processing a stored document, including: at least one external network device being connected to a network; and an image forming apparatus being connected to the at least one network device via the network, the image forming apparatus including: a hardware set used for image formation, a program executed for image formation, and document storage means for storing at least one document, wherein the image forming apparatus, in response to an authentication request for a stored document in the document storage means and document acquisition condition information thereon from an external network device, acquires session information of a session established within the image forming apparatus, and uses the session information and the document acquisition condition information to fulfill the predetermined process request on the stored document.

Additionally, there is provided according to another aspect of the present invention a method of processing a stored document for a system including: at least one external network device being connected to a network; and an image forming apparatus being connected to the at least one network device via the network, the image forming apparatus including: a hardware set used for image formation; a program executed for image formation; and document storage means for storing at least one document, the method including: a first step of acquiring, in response to an authentication request for a stored document in the document storage means from an external network device, session information of a session established within the image forming apparatus, including the session information in display data that the network device uses to create a stored document processing screen, and sending the display data including the session information to the network device; a second step of acquiring the session information from the received display data and sending a predetermined process request using the session information fro the stored document to the image forming apparatus in accordance with a user's instruction; and a third step of using, in response to receipt of the predetermined process request using the session information for the stored document from the network device, the session information to fulfill the predetermined process request for the stored document.

In an embodiment of the present invention, the image forming apparatus may perform the first step and the third step, and the network device performs the second step.

Additionally, there is provided according to another aspect of the present invention a method of processing a stored document for a system including: at least one external network device being connected to a network; and an image forming apparatus being connected to the at least one network device via the network, the image forming apparatus including: a hardware set used for image formation; a program executed for image formation; and document storage means for storing at least one document, the method including: a first step of acquiring, in response to an authentication request for a stored document in the document storage means and document acquisition condition information thereon from an external network device, session information of a session established within the image forming apparatus; and a second step of using the session information and the document acquisition condition information to fulfill the predetermined process request for the stored document.

In an embodiment of the present invention, the image forming apparatus may perform the first step and the second step.

According to one aspect of the present invention, it is possible to provide an image forming apparatus that can have a shared authentication function for a stored document therein and prevent wasteful use of resources thereof and network resources. Furthermore, it is possible to provide method and system of processing a stored document therein for such an image forming apparatus.

Additionally, there is provided according to another aspect of the present invention an image forming apparatus, including: a hardware set being used for image formation; a program being executed for image formation; and a network service, in response to receipt of a session setting request including authentication information from an external network device, performing authentication based on the session setting request, creating session information of a session established between the network service and the network device and session identification information to identify the session information, and sending the session identification information to the network device, whereas the network service, in response to receipt of a predetermined process request using the session identification information from the network device, determining the session information corresponding to the session identification information, and fulfilling the predetermined process request based on the session information.

In an embodiment of the present invention, the network service, in response to the predetermined process request using the session identification information from the network device, may determine whether or not the session information corresponding to the session identification information exists, and when the session information exists, then the network service may fulfill the predetermined process request based on the session information.

In an embodiment of the present invention, the session information may include session identification information, identification information of the network device that sends the session setting request, and identification information of the image forming apparatus that receives the session setting request.

In an embodiment of the present invention, the network service may determine the session information corresponding to the session identification information, and when the identification information of the network device that sends the session setting request, which is included in the session information, and the identification information of the network device that sends the predetermined process request are the same, then the network service may fulfill the predetermined process request.

In an embodiment of the present invention, the session information may include an expiration time, and the session information may be deleted after the expiration time thereof passes.

In an embodiment of the present invention, the network service, in response to receipt of the predetermined process request using the session identification information, may update the expiration time of the session information corresponding to the session identification information.

In an embodiment of the present invention, the network service, in response to receipt of the predetermined process request using the session identification information from the network device, may determine the session information corresponding to the session identification information, and fulfill the predetermined process request within an access range authorized based on the authentication information corresponding to the session information.

In an embodiment of the present invention, the predetermined process request may be related to image formation.

In an embodiment of the present invention, the hardware set may include: scanner means for generating image data from an image; and plotter means for forming an image from image data.

Additionally, there is provided according to another aspect of the present invention an image forming apparatus, including: a hardware set being used for image formation; a program being executed for image formation; document storage means for storing a document; and a document management service, in response to receipt of a session setting request including authentication information from an external network device, creating session information of a session established between the document management service and the network device and session identification information to identify the session information based on the session setting request, and sending the session identification information to the network device, whereas the document management service, in response to receipt of an authentication request using the session identification information for a stored document in the document storage means from the network device, determining the session information corresponding to the session identification information, creating access authentication information for the stored document based on the session information, and sending the created access authentication information to the network device.

In an embodiment of the present invention, the document management service, in response to receipt of the authentication request using the session identification information for the stored document from the network device, may determine whether or not the session information corresponding to the session identification information exists, and when the session information exists, the document management service may create the access authentication information for the stored document based on the session information and send the created access authentication information to the network device.

In an embodiment of the present invention, the session information may include session identification information, identification information of the network device that sends the session setting request, identification information of the image forming apparatus that receives the session setting request, and identification information of the authenticated stored document.

In an embodiment of the present invention, the document management service may determine the session information corresponding to the session identification information, and when the identification information of the network device that sends the session setting request, which is included in the session information, and the identification information of the network device that sends the authentication request for the stored document are the same, the document management service may create access authentication information for the stored document and send the access authentication information to the network device.

In an embodiment of the present invention, the document management service, when identification information of the stored document corresponding to the authentication request is included in the identification information of the authenticated stored document, which is included in the session information, may issue access authentication information to the stored document without authentication for the stored document.

In an embodiment of the present invention, the document management service, when identification information of the stored document corresponding to the authentication request is not included in the identification information of an authenticated stored document in the session information, may perform authentication on the stored document, add a result of the authentication to the identification information of an authenticated stored document, and issue access authentication information on the stored document.

In an embodiment of the present invention, the document management service, in response to receipt of the stored document acquisition request using the session identification information from the network device, may determine the session information corresponding to the session identification information, and send the stored document corresponding to the stored document acquisition request to the network device.

In an embodiment of the present invention, the session information may include an expiration time, and the session information may be deleted after the expiration time thereof passes.

In an embodiment of the present invention, the document management service, in response to receipt of a predetermined process request using the session identification information, may update the session information corresponding to the session identification information.

In an embodiment of the present invention, the hardware set may include: scanner means for generating image data from an image; and plotter means for forming an image from image data.

Additionally, there is provided according to another aspect of the present invention a method of generating access authentication information for an image forming apparatus including a hardware set used for image formation and a program executed for image formation, the method including the steps of: creating, in response to a session setting request including authentication information from an external network device, session information of a session established between the image forming apparatus and the network device and session identification information to identify the session information based on the session setting request, and sending the session identification information, which is used as access authentication information for a predetermined process, to the network device; and determining, in response to receipt of a predetermined process request using the session identification information from the network device, the session information corresponding to the session identification information, and fulfilling the predetermined process request from the network device based on the session information.

Additionally, there is provided according to another aspect of the present invention a method of generating access authentication information for an image forming apparatus including a hardware set used for image formation and a program executed for image formation, the method including the steps of: creating, in response to a session setting request including authentication information from an external network device, session information of a session established between the image forming apparatus and the external network device and session identification information to identify the session information based on the session setting request, and sending the session identification information, which is used as access authentication information for a predetermined process, to the network device; and creating, in response to receipt of an authentication request using the session identification information for a stored document in the image forming apparatus from the network device, determining the session information corresponding to the session identification information, creating access authentication information for the stored document based on the session information, and sending the access authentication information to the network device.

Additionally, there is provided according to another aspect of the present invention a system of generating access authentication information for a predetermined process, the system including: at least one external network device being connected to a network; and an image forming apparatus being connected to the at least one external network device via the network, the. image forming apparatus, in response to receipt of a session setting request including authentication information from an external network device, creating session information of a session established between the image forming apparatus and the network device and session identification information to identify the session information based on the session setting request, and sending the session identification information, which is used as access authentication information for a predetermined process, to the external network device, whereas the image forming apparatus, in response to a predetermined process request using the session identification information from the network device, determining the session information corresponding to the session identification information, and fulfilling the predetermined process request based on the session information.

Additionally, there is provided according to another aspect of the present invention a system of generating access authentication information for a predetermined process, the system including: at least one external network device being to a network; and an image forming apparatus being connected to the at least one external network device via the network, the image forming apparatus, in response to receipt of a session setting request including authentication information from an external network device, creating session information of a session established between the image forming apparatus and the network device and session identification information to identify the session information based on the session setting request, and sending the session identification information, which is used as access authentication information for a predetermined process, to the network device, whereas the image forming apparatus, in response to receipt of an authentication request using the session identification information for a stored document in the image forming apparatus from the network device, determining the session information corresponding to the session identification information, creating access authentication information for the stored document based on the session information. and sending the access authentication information to the network device.

According to one aspect of the present invention, it is possible to provide an image forming apparatus that can reduce unnecessary authentication and strengthen network security. Furthermore, it is possible to provide method and system of generating access authentication information for such an image forming apparatus.

Additionally, there is provided according to another aspect of the present invention an image forming apparatus, including: a hardware set being used for image formation; a program being executed for image formation; and a document management service, in response to receipt of an authentication request for a predetermined process from a first external network device, performing authentication based on the authentication request, creating access authentication information for the predetermined process and access authentication identification information to identify the access authentication information based on a result of the authentication, and sending the access authentication identification information to the first network device, whereas the document management service, in response to receipt of a session setting request including the access authentication identification information from a second external network device, determining the access authentication information corresponding to the access authentication identification information, storing the access authentication information in session information of a session established between the document management service and the second network device based on the session setting request, and sending session identification information to identify the session to the second network device.

In an embodiment of the present invention, the document management service, in response to a predetermined process request using the session identification information from the second network device, may determine the session information corresponding to the session identification information, and fulfill the predetermined process request based on the access authentication information stored in the session information.

In an embodiment of the present invention, the access authentication information may include access authentication identification information and authenticated process information on a process that is authenticated in accordance with the authentication.

In an embodiment of the present invention, the session information may include session identification information, identification information of the second network device that sends the session setting request, identification information of the image forming apparatus that receives the session setting request, and the authenticated process information.

In an embodiment of the present invention, the document management service, when said document management service, in response to receipt of the session setting request including the access authentication identification information from the second network device, determines the access authentication information corresponding to the access authentication identification information and stores the access authentication information in the session information of the session established between the document management service and the second network device, may further add the authenticated process information included in the access authentication information to the authenticated process information included in the session information.

In an embodiment of the present invention, the document management service, in response to receipt of a predetermined process request using the session identification information from an external network device, may determine the session information corresponding to the session identification information, and when the predetermined process is included in the authenticated process information of the session information and further identification information of the second network device that sends the session setting request included in the session information and identification information of the network device that sends the predetermined process request are the same, the document management service may fulfill the predetermined process request.

In an embodiment of the present invention, the session information may include an expiration time, and the session information may be deleted after the expiration time thereof passes.

In an embodiment of the present invention, the document management service, in response to receipt of a predetermined process request using the session identification information, may update the expiration time of the session information corresponding to the session identification information.

In an embodiment of the present invention, the predetermined process request may be related to image formation.

In an embodiment of the present invention, the hardware set may include: scanner means for generating image data from an image; and plotter means for forming an image from image data.

In an embodiment of the present invention, the second network device may receive the access authentication identification information from the first network device.

Additionally, there is provided according to another aspect of the present invention an image forming apparatus, including: a hardware set being used for image formation; a program being used for image formation; document storage means for storing at least one document; and a document management service, in response to receipt of an authentication request for a stored document in the document storage means from a first external network device, performing authentication based on the authentication request, creating access authentication information for the stored document and access authentication identification information to identify the access authentication information based on a result of the authentication, and sending the access authentication identification information to the first network device, whereas the document management service, in response to receipt of a session setting request including the access authentication identification information from a second external network device, determining the access authentication information corresponding to the access authentication identification information, storing the access authentication information in session information of a session established between the document management service and the second network device, and sending session identification information to identify the session to the second network device.

In an embodiment of the present invention, the document management service, in response to a predetermined process request using the session identification information for the stored document from the second network device, may determine the session information corresponding to the session identification information, and fulfill the predetermined process request based on the access authentication information in the session information.

In an embodiment of the present invention, the access authentication information may include access authentication identification information and identification information of a stored document that is authenticated in accordance with the authentication.

In an embodiment of the present invention, the session information may include session identification information, identification information of the second network device that sends the session setting request, identification information of the image forming apparatus that receives the session setting request, and identification information of the authenticated stored document.

In an embodiment of the present invention, the document management service, when the document management service, in response to receipt of the session setting request including the access authentication identification information for the stored document in the document storage means from the second network device, determines the access authentication information corresponding to the access authentication identification information and stores the access authentication information in the session information of the session established between the document management service and the second network device based on the session setting request, may further add the identification information of the authenticated stored document included in the access authentication information to the identification information of the authenticated stored document included in the session information.

In an embodiment of the present invention, the document management service, in response to receipt of a predetermined process request using the session identification information for a stored document in the document storage means from a network device, may determine the session information corresponding to the session identification information, and when identification information of the stored document is included in the session information and further the identification information of the second network device that sends the session setting request and the identification information of the network device that sends the predetermined process request are the same, the document management service may fulfill the predetermined process request for the stored document.

In an embodiment of the present invention, the session information may include an expiration time, and the session information may be deleted after the expiration time thereof passes.

In an embodiment of the present invention, the document management service, in response to receipt of a predetermined process request using the session identification information, may update the expiration time of the session information corresponding to the session identification information.

In an embodiment of the present invention, the predetermined process request may be related to image formation.

In an embodiment of the present invention, the hardware set may include: scanner means for generating image data from an image; and plotter means for forming an image from image data.

In an embodiment of the present invention, the second network device may receive the access authentication identification information from the first network device.

Additionally, there is provided according to another aspect of the present invention a method of generating access authentication information for an image forming apparatus having a hardware set used for image formation and a program executed for image formation, the method including the steps of: performing, in response to receipt of an authentication request for a predetermined process from a first external network device, authentication based on the authentication request, creating access authentication information for the predetermined process and access authentication identification information to identify the access authentication information based on a result of the authentication, and sending the access authentication identification information to the first network device; and determining, in response to receipt of a session setting request including the access authentication identification information from a second external network device, the access authentication information corresponding to the access authentication identification information, storing the access authentication information in session information of a session established between the image forming apparatus and the second network device based on the session setting request, and sending session identification information to identify the session to the second network device.

Additionally, there is provided according to another aspect of the present invention a method of generating access authentication information for an image forming apparatus having a hardware set used for image formation, a program executed for image formation and document storage means for storing at least one document, the method including the steps of: performing, in response to receipt of an authentication request for a stored document in the document storage means from a first external network device, authentication based on the authentication request, creating access authentication information for the stored document and access authentication identification information to identify the access authentication information based on a result of the authentication, and sending the access authentication identification information to the first network device; and determining, in response to receipt of a session setting request including the access authentication identification information from a second external network device, the access authentication information corresponding to the access authentication identification information, storing the access authentication information in session information of a session established between the image forming apparatus and the second network device based on the session setting request, and sending session identification information to identify the session to the second network device.

Additionally, there is provided according to another aspect of the present invention a system of generating access authentication information for a predetermined process, the system including: at least one external network device being connected to a network; and an image forming apparatus being connected to the at least one external network device via the network, the image forming apparatus, in response to receipt of an authentication request for a predetermined process from a first external network device, performing authentication based on the authentication request, creating access authentication information for the predetermined process and access authentication identification information to identify the access authentication information based on a result of the authentication, and sending the access authentication identification information to the first network device, whereas the image forming apparatus, in response to receipt of a session setting request including the access authentication identification information from a second external network device, determining the access authentication information corresponding to the access authentication identification information, storing the access authentication information in session information of a session established between the image forming apparatus and the second network device based on the session setting request, and sending session identification information to identify the session to the second network device.

Additionally, there is provided according to another aspect of the present invention a system of generating access authentication information for a predetermined process, the system including: at least one external network device being connected to a network; an image forming apparatus being connected to the at least one external network device via the network, the image forming apparatus, in response to receipt of an authentication request for a stored document in the image forming apparatus from a first external network device, performing authentication based on the authentication request, creating access authentication information for the stored document and access authentication identification information to identify the access authentication information based on a result of the authentication, and sending the access authentication identification information to the first network device, whereas the image forming apparatus, in response to receipt of a session setting request including the access authentication identification information from a second external network device, determining the access authentication information corresponding to the access authentication identification information, storing the access authentication information in session information of a session established between the image forming apparatus and the second network device based on the session setting request, and sending session identification information to identify the session to the second network device.

Other objects, features and advantages of the present invention will become more apparent from the following detailed description when read in conjunction with the accompanying drawings, in which:
FIG. 1 is a block diagram illustrating an exemplary structure of a multifunctional machine according to an embodiment of the present invention;
FIG. 2 is a block diagram illustrating an exemplary hardware configuration of a multifunctional machine according to an embodiment of the present invention;
FIG. 3 is a diagram for explaining a stored document acquisition method according to a first embodiment of the present invention;
FIG. 4 is a sequence diagram of the stored document acquisition method according to the second embodiment;
FIG. 5A is a diagram illustrating an exemplary session ID for identifying a session established between a network service and a document management service of a multifunctional machine according to the first embodiment;
FIG. 5B is a diagram illustrating exemplary session information associated with the session ID;
FIG. 6 is a diagram for explaining exemplary relationship between an HTTP session object and session IDs;
FIG. 7 is a diagram illustrating an exemplary document acquisition condition selection screen according the first embodiment;
FIG. 8 is a diagram for explaining a stored document acquisition method according to a second embodiment;
FIG. 9 is a sequence diagram of the stored document acquisition method according to the second embodiment;
FIG. 10 is a diagram for explaining a stored document acquisition method according to a third embodiment of the present invention;
FIG. 11 is a sequence diagram of the stored document acquisition method according to the third embodiment;
FIG. 12A is a diagram illustrating an exemplary structure of a document ticket according to the present invention;
FIG. 12B is a diagram illustrating exemplary document ticket information according to the present invention;
FIG. 13 is a diagram for explaining a stored document acquisition method according to a fourth embodiment of the present invention;
FIG. 14 is a sequence diagram of the store document acquisition method according to the fourth embodiment;
FIG. 15 is a diagram for explaining an exemplary session ID in display data according to the fourth embodiment;
FIG. 16 is a diagram for explaining exemplary display data in which a session ID is embedded;
FIG. 17 is a diagram illustrating an exemplary Web page for acquiring a stored document according to the fourth embodiment;
FIG. 18 is a diagram for explaining an exemplary HTTP request including a session ID according to the fourth embodiment;
FIG. 19 is a diagram for explaining a stored document acquisition method according to a fifth embodiment of the present invention;
FIG. 20 is a diagram for explaining a stored document acquisition method according to a sixth embodiment of the present invention;
FIG. 21 is a sequence diagram of the stored document acquisition method according to the sixth embodiment;
FIG. 22 is a diagram for explaining an access authentication information generation method according to a seventh embodiment of the present invention;
FIG. 23 is a diagram illustrating an exemplary structure of session information according to the seventh embodiment;
FIG. 24 is a diagram for explaining an access authentication information generation method according to an eighth embodiment of the present invention;
FIG. 25 is a diagram illustrating an exemplary structure of session information;
FIG. 26 is a diagram for explaining an access authentication information generation method according to an ninth embodiment of the present invention; and
FIG. 27 is a sequence diagram of the access authentication information generation method according to the ninth embodiment.

### DETAILED DESCRIPTION OF THE PREFERRED EMBODIMENTS

In the following, embodiments of the present invention will be described with reference to the accompanying drawings.

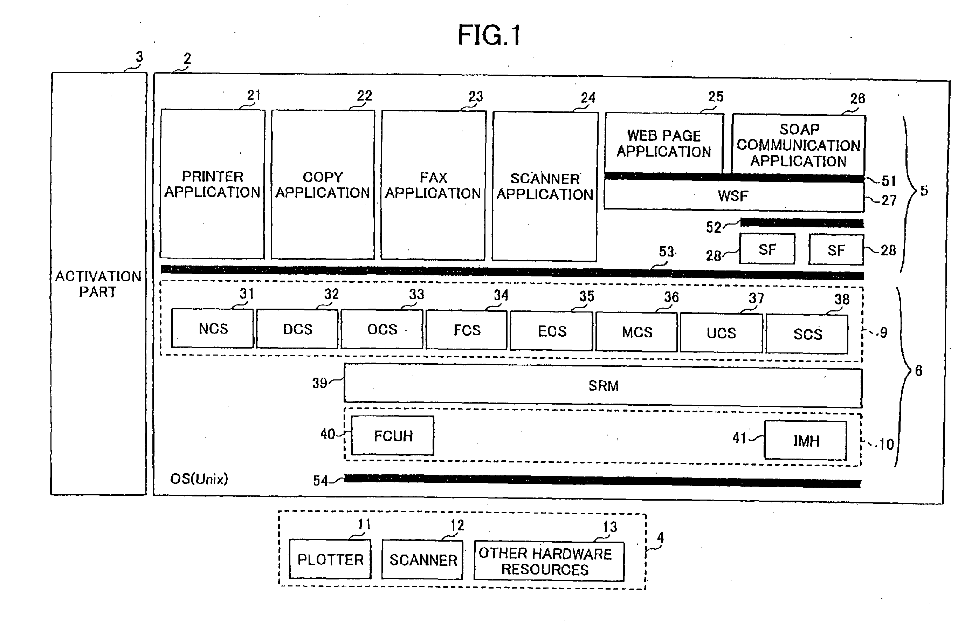

A description is given, with reference to FIG. 1, of an exemplary structure of a multifunctional machine according to an embodiment of the present invention. FIG. 1 is a block diagram illustrating an exemplary structure of a multifunctional machine (image forming apparatus) according to an embodiment of the present invention.

Referring to FIG. 1, a multifunctional machine 1 comprises a software set 2, an activation part 3 and a hardware set 4.

Immediately after the multifunctional machine 1 is switched ON, the activation part 3 activates an application layer 5 and a platform 6. In this case, for instance, the activation part 3 loads programs of the application layer 5 and the platform 6 from a hard disk device (HDD) into a memory area, and executes the programs.

The hardware set 4 comprises a plotter 11, a scanner 12 and other hardware resources 13 such as a facsimile.

The software set 2 comprises the application layer 5 and the platform 6 that are operated on an operating system such as UNIX (Registered Trademark).

The application layer 5 comprises programs, each of which is executed for a process specific to each user service in association with image formation using a printer, a copier, a facsimile, a scanner or the like. As shown in the upper side of the software set 2 in FIG. 1, the application layer 5 includes a printer application 21, a copier application 22, a fax application 23, a scanner application 24, a Web page application 25, a simple object access protocol (SOAP) communication application 26, a shared function layer 7 configured from at least one shared function SF 28, and a Web service function WSF 27 between the Web page application 25 and SF 28.

WSF 27 includes an application program interface API 51 through which a process request from the Web page application 25 or the SOAP communication application 26 is received in accordance with a predetermined function. Also, SF 28 includes API 52 through which a process request from WSF 27 is received in accordance with a predetermined function. In response to receipt of a process request from the WEB page application 25 or the SOAP communication application 26 via API 51, WSF 27 selects an SF 28 corresponding to the received process request and then sends the received process request to the selected SF 28 via API 52. In response to receipt of the process request via API 52, the selected SF 28 performs a process corresponding to the received process request.

For instance, the multifunctional machine 1 may include two SFs 28, as illustrated in FIG. 1. In this case, one of the two SFs 28 performs a process for a network service 142 as described in detail below, and the other performs a process for a document management service 143 as described in detail below.

On the other hand, as shown in the lower side of the software set 2 in FIG. 1, the platform 6 comprises a control service layer 9, a system resource manager SRM 39 and a handler layer 10. The control service layer 9 interprets a process request sent from the application layer 5 and then creates an acquisition request to acquire the hardware set 4. SRM 39 manages the hardware set 4, which comprises at least one hardware item, and arbitrates the acquisition request created by the control service layer 9. Corresponding to the acquisition request from SRM 39, the handler layer 10 governs the hardware set 4. Here, the platform 6 has API 53 through which a process request from the application layer 5 is received in accordance with a predefined function. Also, the operating system executes individual software items in the application layer 5 and the platform 6 in parallel.

The control service layer 9 comprises at least one service module: a network control service NCS 31, a delivery control service DCS 32, an operation panel control service OCS 33, a fax control service FCS 34, an engine control service ECS 35, a memory control service MCS 36, a user information control service UCS 37, a system control service SCS 38 and so on, as illustrated in FIG. 1.

NCS 31 distributes to individual applications data received from a network in accordance with each protocol. In addition, when data are sent from individual applications to a network, NCS 31 arbitrates the individual data. For instance, NCS 31 controls such data communication with an external network device connected via- the network by means of httpd (HyperText Transfer Protocol Daemon) of HTTP (HyperText Transfer Protocol).

DCS 32 controls delivery of a stored document. OCS 33 controls an operation panel, which serves as communication means between an operator and the body of the multifunctional machine 1. FCS 34 offers APIs for fax transmission from the application layer 5 via PSTN (Public Service Telephone Network) or ISDN (Integrated Services Digital Network), registration and citation of various fax data managed in a backup memory, reading of fax data, and printing of received fax data. ECS 35 controls engine parts of the plotter 11, the scanner 12 and the other hardware resources 13. MCS 36 performs memory control such as memory acquisition, memory release, HDD utilization, image data compression and image data magnification. UCS 37 manages user information. SCS 38 performs various system control processes such as application management, operation part control, system screen control, LED control, hardware resource management and interrupt application control.

SRM 39, together with SCS 38, controls the multifunctional machine 1 including the hardware set 4. For instance, SRM 39 arbitrates and controls the hardware set 4 such as the plotter 11 and the scanner 12 in accordance with an acquisition request for a stored document, in which the hardware set 4 is required to fulfill the request, from an upper layer thereof.

Specifically, SRM 39 determines whether or not at least one component of the hardware set 4 subjected to an acquisition request is available, that is, whether or not the component is being used for another acquisition request. If the component is available, SRM 39 informs the upper layer that has issued the acquisition request of availability of the component. In response to an acquisition request from an upper layer thereof, SRM 39 also schedules individual components of the hardware set 4 and directly performs operations such as paper feeding using a printer engine, image formation using the printer engine, memory reservation and file creation in accordance with the request content.

The handler laysr 10 comprises a fax control unit handler FCUH 40 for managing a fax control unit FCU to be hereinafter described, and an image memory handler IMH 41 for allocating a memory to a process and managing the allocated memory. SRM 39, FCUH 40 and others use an engine I/F 54, through which a process request for the hardware set 4 is sent thereto in accordance with a predetermined function, to provide the process request to the hardware set 4.

In the configuration in FIG. 1, the multifunctional machine 1 can perform processes commonly necessary for Individual applications on the uniform platform 6.

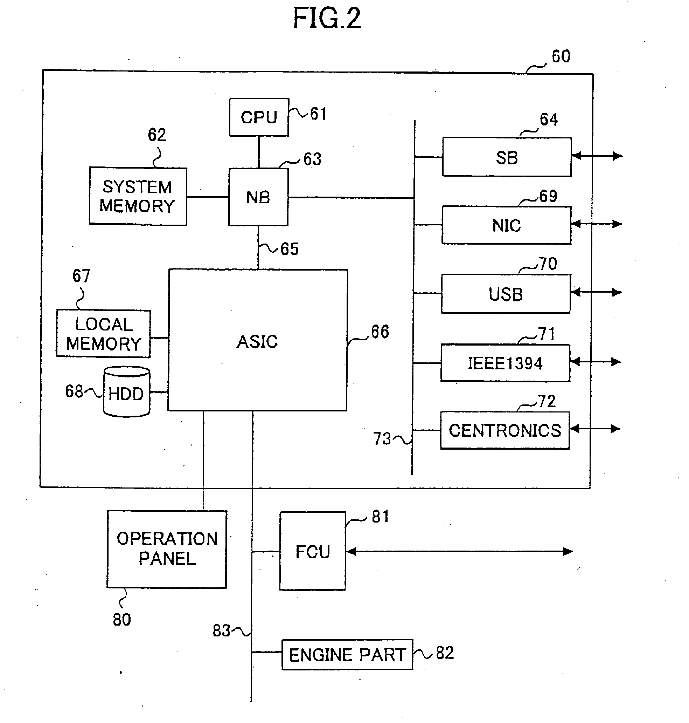

A description is given, with reference to FIG. 2, of an exemplary hardware configuration of a multifunctional machine 1 according to an embodiment of the present invention. FIG. 2 is a block diagram illustrating an exemplary hardware configuration of the multifunctional machine 1.

Referring to FIG. 2, the multifunctional machine 1 comprises a controller 60, an operation panel 80, a FCU (Fax Control Unit) 81, and an engine part 82.

The controller 60 comprises a CPU (Central Processing Unit) 61, a system memory 62, a north bridge NB 63, a south bridge SB 64, an ASIC (Application Specific Integrated Circuit) 66, a local memory 67, a HDD 68, a network interface card NIC 69, a USB (Universal Serial Bus) device 70, an IEEE1394 device 71, and a centronics 72. The operation panel 80 is connected to ASIC 66. Also, FCU 81 and the engine part 82 are connected to ASIC 66 via a PCI (Peripheral Component Interconnect) bus 83.

In the controller 60, the local memory 67 and HDD 68 are connected to ASIC 66, and CPU 61 is connected to ASIC 66 via NB 63. In order to address a case where an interface of CPU 61 is not disclosed, CPU 61 is connected to ASIC 66 via NB 63.

In addition, ASIC 66 is connected to NB 63 via an AGP (Accelerated Graphics Port) 65. In order to control execution of at least one process that constitutes the application layer 5 and the platform 6 in FIG. 1, ASIC 66 is connected to NB 63 via not a low-speed PCI bus but AGP 65. As a result, it is possible to prevent performance degradation.

CPU 61 exercises overall control over the multifunctional machine 1. CPU 61 implements the above-mentioned NCS 31, DCS 32, OCS 33, FCS 34, ECS 35, MCS 36, UCS 37 and SCS 38 on the operating system. At the same time, CPU 61 executes the printer application 21, the copy application 22, the fax application 23, the scanner application 24, the Web page application 25, WSF 27 and SF 28, which constitute the application layer 5 as described above.

NB 63 serves as a bridge to connect among CPU 61, the system memory 62, SB 64, ASIC 66, NIC 69, the USB device 70, the IEEE1394 device 71 and the centronics 72. Here, SB 64, NIC 69, the USB device 70, the IEEE1394 device 71 and the centronics 72 are connected to NB 63 via the PCI bus 73. On the other hand, SB 64 serves as a bridge to connect the PCI bus 73 to a ROM, peripheral devices and others (not illustrated).

The system memory 62 is used as an image memory of the multifunctional machine 1. The local memory 67 is used as a copy image buffer and a code buffer. ASIC 66, which is a hardware component for image processing, is an IC dedicated to image processing. HDD 68 maintains image data, document data, programs, font data, form data and so on.

NIC 69 serves as an interface to connect between the multifunctional machine 1 and a network. Also, the USB device 70, the IEEE1394 device 71 and the centronics 72 are interfaces in compliance with respective standards, as appreciated by those skilled in the art. The operation panel 80 serves as an operation part to accept an input manipulated by an operator and display messages or data to the operator.

It is noted that FCU 81 includes a backup memory. When the multifunctional machine 1 is OFF, received fax data are temporarily stored in the backup memory of FCU 81.

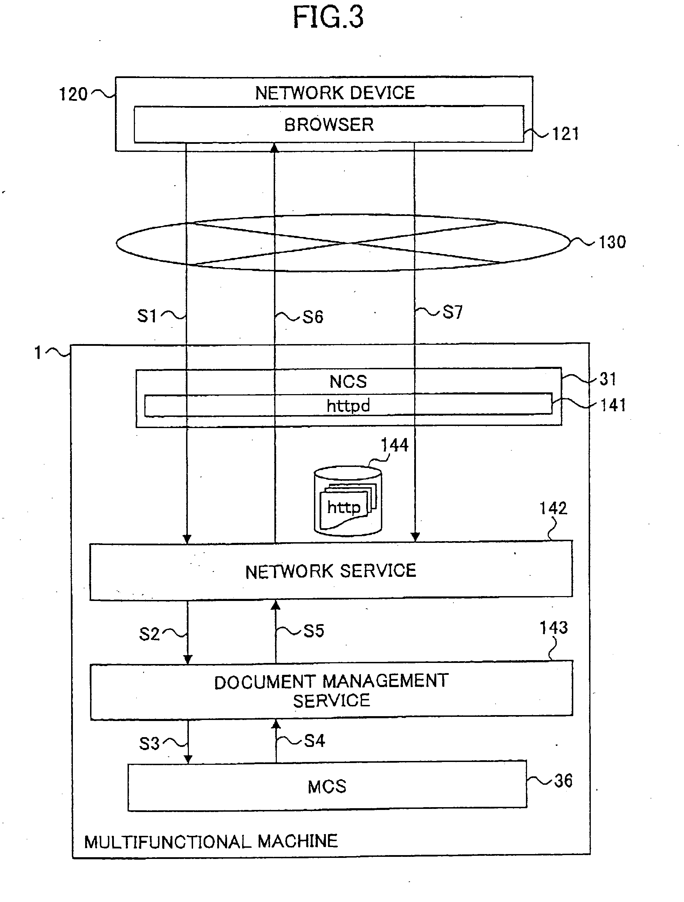

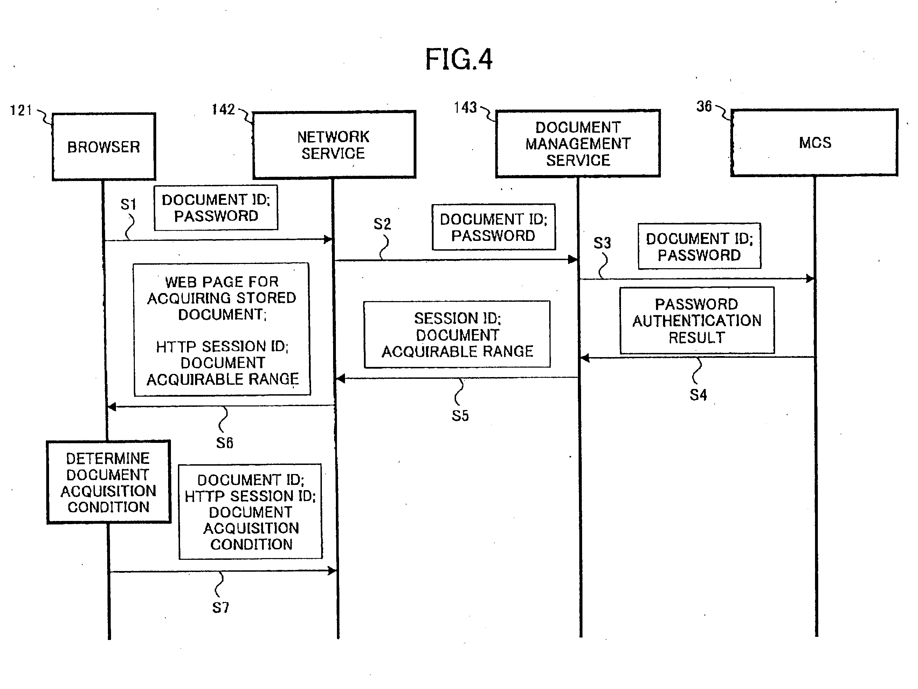

A description is given, with reference to FIG. 3 through FIG. 7, of a stored document acquisition method, which is implemented by the above-mentioned multifunctional machine 1, according to a first embodiment of the present invention. FIG. 3 is a diagram for explaining a stored document acquisition method according to the first embodiment of the present invention. FIG. 4 is a sequence diagram of the stored document acquisition method according to the first embodiment. Here, it is noted that components of the multifunctional machine 1 unnecessary to explain the stored document acquisition method are omitted in FIG. 3 and FIG. 4.

In the stored document acquisition method, a network device 120, which is connected to the multifunctional machine 1 via a network 130 such as the Internet, attempts to acquire a stored document, that is, a document file stored in the multifunctional machine 1.

Referring to FIG. 3 and FIG. 4, it is supposed that a browser 121 of the network device 120 has obtained a list of stored documents in the multifunctional machine 1 and document IDs thereof in advance, for example, by means of an HTTP request and an HTTP response. A user of the network device 120 selects at least one desired stored document from the listed stored documents with reference to the list displayed in the browser 121. At the same time, if the user needs to input a password so as to acquire the desired stored document, the user provides the password to the browser 121. Specifically, in order to acquire the stored document from the multifunctional machine 1, for example, the user clicks a mouse or the like on a predetermined button displayed on the browser 121.

At step S1 the browser 121 creates an HTTP request including both the document ID of the selected stored document and the password, and sends the created HTTP request to the multifunctional machine 1 via the network 130. The HTTP request is delivered to a network service 142 of the multifunctional machine 1 via httpd 141 of NCS 31. Then, the process control of the stored document acquisition method moves to step S2.

At step S2, the network service 142 retrieves the document ID and the password from the HTTP request, and sends the document ID and the password to a document management service 143. Then, the process control moves to step S3.

At step S3, the document management service 143 sends the received document ID and password to MCS 36 to authenticate the password. MCS 36 authenticates the password based on the received document ID and the password sent from the document management service 143. Then, the process control moves to step S4.

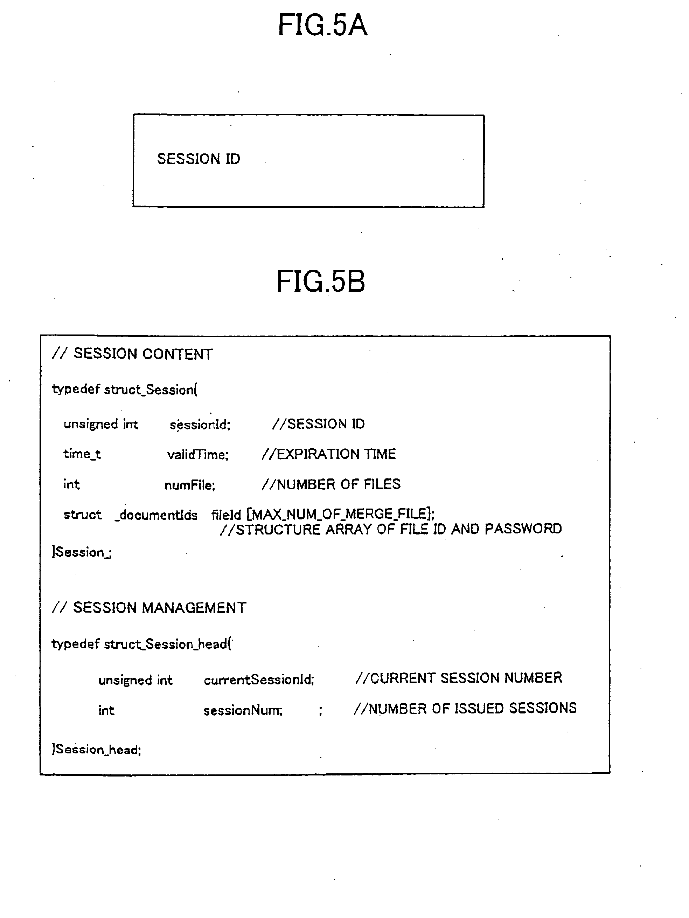

At step S4, MCS 36 sends the password authentication result to the document management service 143. If the password is successfully authenticated, the document management service 143 associates the document ID with a session ID of a session established between the document management service 143 and the network service 142, and creates session information, for example, as illustrated in FIGS. 5A and 58. Here, FIG. 5A shows an exemplary session ID for identifying a session established between the network service 142 and the document management service 143. FIG. 5B shows exemplary session information associated with the session ID.

The document management service 143 maintains session information. Session information comprises session content information and session management information. The session content information comprises a session ID, an expiration time of the session, the number of authenticated stored documents, and a file ID-password structure array- Each of the file ID-password structures is formed of a pair of a file ID, which is used as a document ID, and a password. On the other hand, the session management information comprises a current session ID and the number of issued sessions. Here, the file ID-password structure array represents authenticated stored documents in this session.

For each session established between the document management service 143 and the network service 142, the document management service 143 can use the session ID and the session information to manage a stored document authenticated in the session. In other words, the session ID works as certification indicating that the stored documents corresponding to the session ID have been authenticated. In the stored document acquisition method according to this embodiment, after a predetermined time has passed since creation of session information, the session information is invalidated for security measures. Then, the process control moves to step S5.

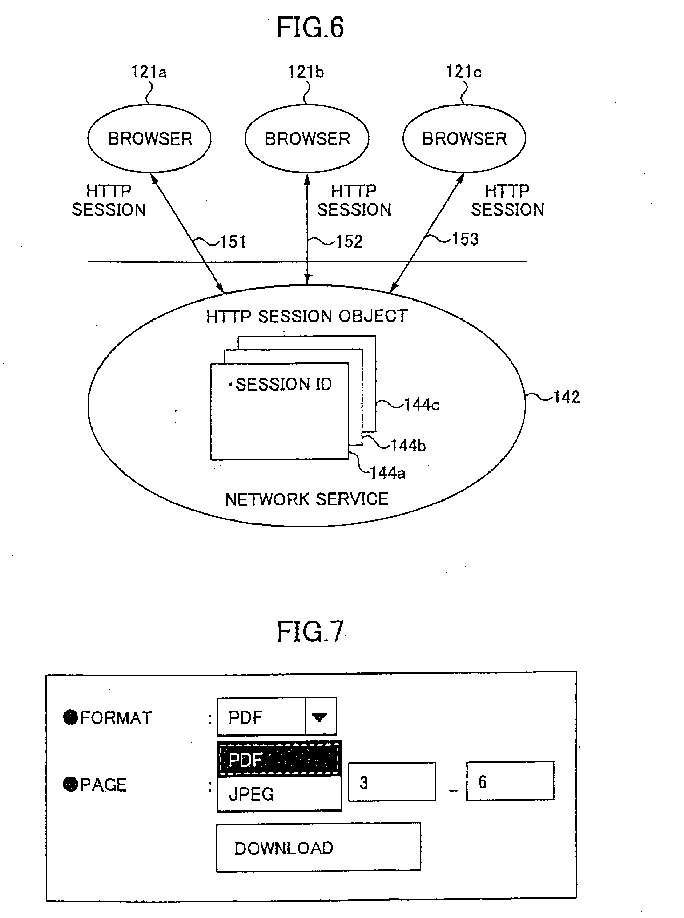

At step S5, the document management service 143 sends document acquirable range information, which is described below, together with the session ID to the network service 142. The network service 142 has an HTTP session object 144 for each HTTP session established between the network service 142 and the browser 121, and manages the session ID sent from the document management service 143 as a component of the HTTP session object 144, as illustrated in FIG. 6.

FIG. 6 is a diagram for explaining exemplary relationship between an HTTP session object 142 and a session ID sent from the document management service 143. Referring to FIG. 6, HTTP sessions 151 through 153 are established between respective browsers 121a through 121c and the network service 142.

For the HTTP sessions 151 through 153, the network service 142 has HTTP session objects 144a through 144c, respectively. For instance, the HTTP session object 144a corresponds to the HTTP session 151 established between the browser 121a and the network service 142. Also, the HTTP session objects 144b and 144c correspond to the HTTP sessions 152 and 153 established between the browsers 121b and 121c and the network services 142, respectively.

For instance, when the network service 142 receives a session ID from the document management service 143 in response to an HTTP request from the browser 121a, the network service 142 manages the session ID as a component of the HTTP session object 144a.

In this manner, when such one-to-one correspondence of the HTTP sessions 151 through 153 to the HTTP session objects 144a through 144c is provided and session IDS are managed based on the HTTP session objects 144a through 144c, it is possible to identify a session ID for each of the browsers 121a through 121c. Then, the process control moves to step S6.

At step S6, the network service 142 creates display data that the network device 120 uses to create a Web page for acquiring at least one stored document. The display data include the document acquirable range information sent from the document management service 143. The document acquirable range information comprises a image format of a store document and a page number thereof.

In an alternative embodiment of the present invention, the document acquirable range information may include a component of a stored document that a user can acquire with high possibility corresponding to a document ID sent from the network device 120 at step S1.

The network service 142 sends the display data to the browser 121 of the network device 120 via httpd 141 of NCS 31 and the network 130. When the network service 142 sends the display data to the browser 121, the network service 142 uses Cookie to send the HTTP session ID to the browser 121. Here, the HTTP session ID works as identification information for identifying the HTTP session established between the browser 121 and the network service 142.

The browser 121 uses the received display data to display a WEB page for acquiring at least one stored document. When a user selects a stored document from a displayed list of authenticated stored documents, the browser 121 displays a document acquisition condition selection screen as illustrated in FIG. 7.

FIG. 7 is a diagram illustrating an exemplary document acquisition condition selection screen. In the document acquisition condition selection screen in FIG. 7, a user is prompted to determine a document image format and a page number, which are exemplary document acquisition conditions, of a desired stored document. For instance, the user can select PDF (Portable Document Format) or JPEG (Joint Photographic Experts Group) as the document image format in FIG. 7. After the user determines the document acquisition conditions in the displayed document acquisition condition selection screen, the process control moves to step 57.

At step S7, the browser 121 creates an HTTP request including both the document ID and the document acquisition conditions of the stored document designated by the user, and sends the created HTTP request to the multifunctional machine 1 via the network 130. The HTTP request is delivered to the network service 142 of the multifunctional machine 1 via httpd 141 of NCS 31.

Here, when the browser 121 sends the HTTP request to the network service 142, the browser 121 also sends the HTTP session ID through Cookie. The network service 142 identifies the session ID, which is managed by the HTTP session object 144, corresponding to the received HTTP session ID. For instance, in the situation illustrated in FIG. 6, when the network service 142 receives the HTTP session ID from the browser 121a, the network service 142 identifies the session ID corresponding to the received HTTP session ID through the HTTP session object 144a.

As shown in FIG. 3, the browser 121 issues the HTTP request to the network service 142 at step S7 without direct delivery of the HTTP request to the document management service 143. In this case, the session ID corresponding to the HTTP session ID is identified in the network service 142. As a result, it is possible to authenticate the acquisition request through the identified session ID.

In this fashion, by designating at least one of stored documents that meet a given document acquisition condition by manipulating the browser 121, the user can acquire a desired stored document. In addition, since the multifunctional machine 1 makes effective use of a session ID and an HTTP session ID as illustrated in FIG. 3, it is possible to prevent unnecessary transmission of stored document data themselves. As a result, it is possible to prevent wasteful use of the hardware set 4 of the multifunctional machine 4 and network resources.

Additionally, since session information includes information on authenticated stored documents, it is unnecessary to perform password authentication for each document acquisition request. As a result, it is possible to reduce user's manipulation. Furthermore, the session information is invalidated after a predetermined time has passed since creation of the session information. As a result, the above-mentioned stored document acquisition method is effective on security.

After completion of step 57, the network service 142 uses the received document ID, document acquisition condition information and session ID to acquire the desired stored document, for example, from HDD 68. Various embodiments to actually acquire a stored document by using a document ID, document acquisition condition information and a session ID can be considered. In the following, some of the embodiments are described.

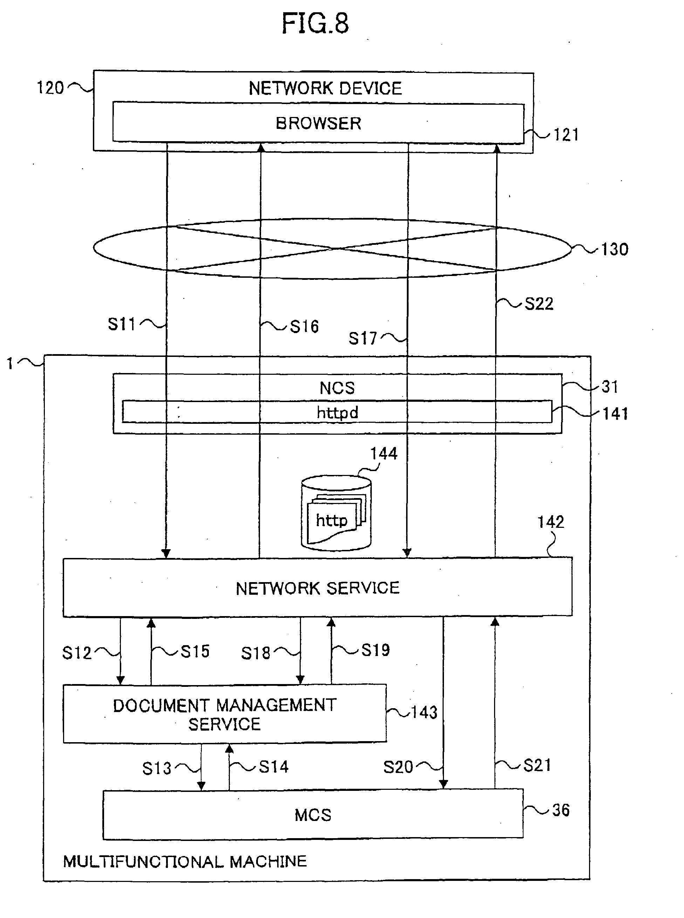

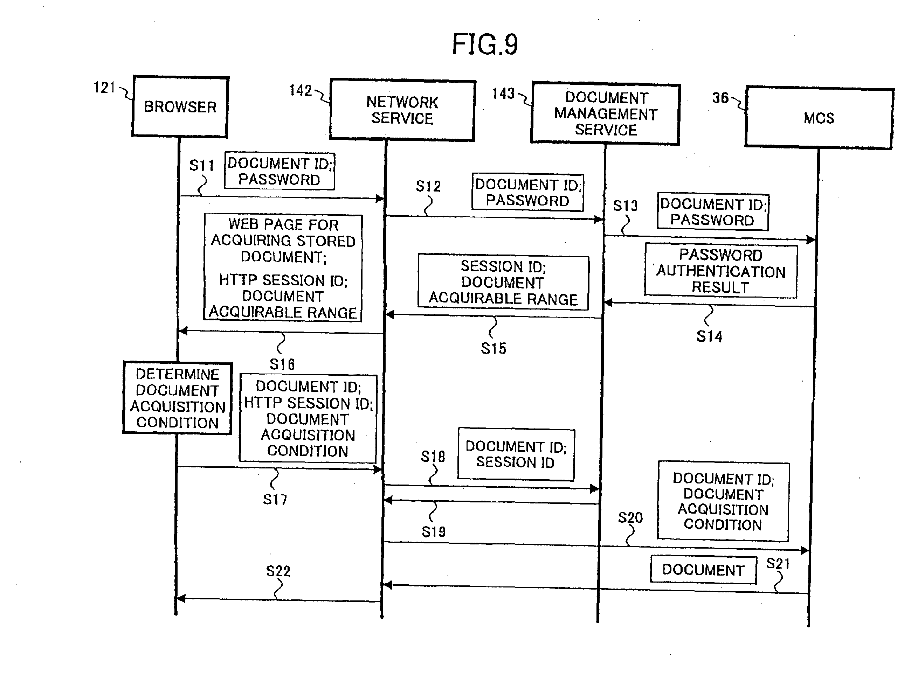

A description is given, with reference to FIG. 8 and FIG. 9, of a stored document acquisition method according to a second embodiment of the present invention. FIG. 8 is a diagram for explaining a stored document acquisition method according to the second embodiment. FIG. 9 is a sequence diagram of the stored document acquisition method. Here, components unnecessary to explain the stored document acquisition method are omitted in FIG. 8 and FIG. 9. In addition, a description of steps S11 through S17 in FIG. 8 is omitted because these steps are the same as the above-mentioned steps S1 through S7 in FIG. 3.

At step S18, the network service 142 identifies a session ID corresponding to a document ID in an HTTP request sent at step S17 and an ETTP session ID through an HTTP session object corresponding to the HTTP session ID, and sends the identified session ID together with the document ID and the document acquisition condition to the document management service 143.

The document management service 143 receives the document ID and the session ID from the network service 142 and determines validity of the session ID. For this determination, the document management service 143 determines whether or not the session ID is valid to the document ID. The validity of the session ID to the document ID can be determined based on session information, which the document management service 143 maintains, associated with the session ID. After determination of the validity of the session ID, the process control moves to step S19.

At step S19, the document management service 143 sends the determination result to the network service 142. If the session ID is valid to the document ID, the process control moves to step S20.

At step S20, the network service 142 sends the document ID and the document acquisition condition, which have been designated by the user as mentioned above, to MCS 36 so as to request the desired stored document. MCS 36 uses the received document ID and document acquisition condition to fetch the stored document, for example, from HDD 68. Then, the process control moves to step S21.

At step S21, MCS 36 sends the stored document to the network service 142. Then, the process control moves to step S22.

At step S22, the network service 142 sends the received stored document to the network device 120 via httpd 141 of NCS 31 and the network 130. In an alternative embodiment of the present invention, the network service 142 may send display data of a WEB page in which the stored document is made viewable instead of the stored document itself. In such an embodiment, for example, in some cases where an HTTP request is determined to be invalid at step S17, where the session ID is determined to be invalid to the document ID at step S19, or where an error is replied at step 521, the network service 142 can send display data of a Web page indicative of a reason on unavailability or inaccessibility to the stored document at step S22. Based on the display data of a Web page sent by the network service 142, the Web page is displayed in the browser 121.

In this fashion, by designating at least one of stored documents that meet a document acquisition condition by manipulating the browser 121, the user can acquire the desired stored document. In addition, since the multifunctional machine 1 makes effective use of a session ID and an HTTP session ID as illustrated in FIG. 3, it is possible to prevent unnecessary transmission of stored document data themselves. As a result, it is possible to prevent wasteful use of the hardware set 4 of the multifunctional machine 1 and network resources.

Additionally, since session information includes information on authenticated stored documents, it is possible to prevent unnecessary password authentication for each document acquisition request. As a result, it is possible to reduce user's manipulation. Furthermore, session information is invalidated after a predetermined time has passed since creation of the session information. As a result, the above-mentioned stored document acquisition method is effective on security.

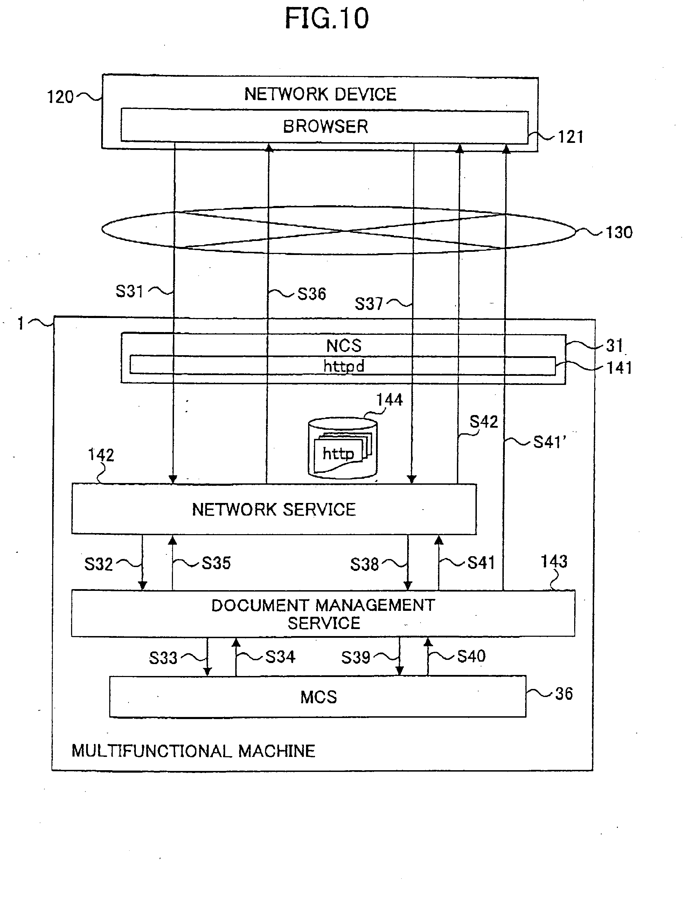

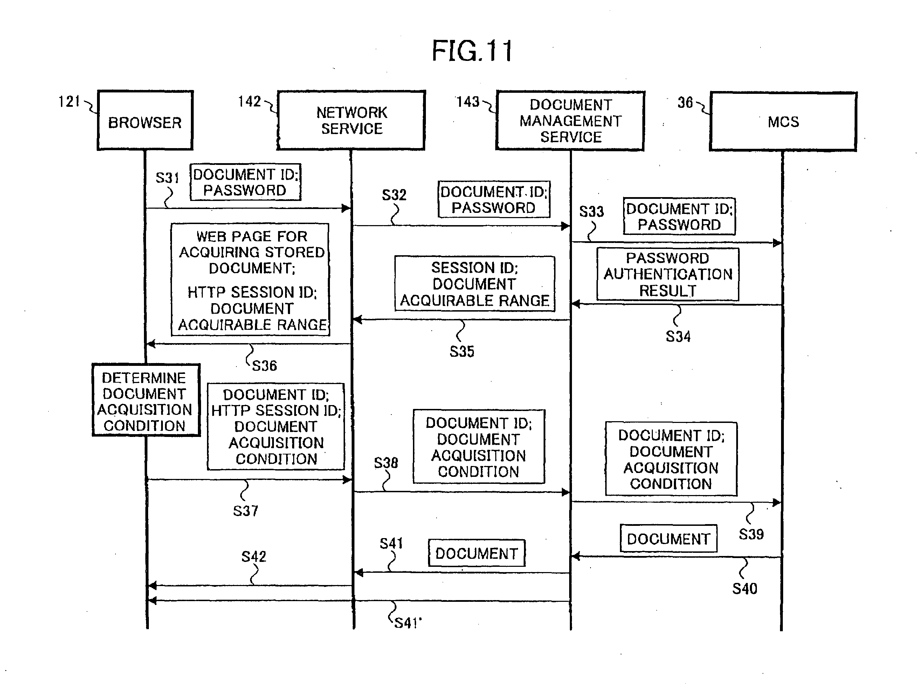

A description is given, with reference to FIG. 10 through FIG. 12, of a stored document acquisition method according to a third embodiment of the present invention. FIG. 10 is a diagram for explaining a stored document acquisition method according to the third embodiment. FIG. 11 is a sequence diagram of the stored document acquisition method. Here, components unnecessary to explain the stored document acquisition method are omitted in FIG. 10 and FIG. 11. In addition, a description of steps S31 through S37 is omitted because the steps are the same as the above-mentioned steps S1 through S7 in FIG. 3.

At step S38, the network service 142 identifies a session ID corresponding to a document ID in an HTTP request received at step S37 and an HTTP session ID through an HTTP session object 144, and sends the identified session ID together with the document ID and the document acquisition condition to the document management service 143.

The document management service 143 receives the document ID and the session ID from the network service 142 and determines validity of the session ID. If the session ID is determined to be valid, the process control moves to step S39.

At step S39, the document management service 143 sends the document ID and the document acquisition condition to MCS 36 so as to request the desired stored document. Based on the received document ID and document acquisition condition, MCS 36 fetches the stored document, for example, from HDD 68. Then, the process control moves to step S40.

At step S40, MCS 36 sends the stored document to the document management service 143. Then, the process control moves to step S41

At step S41, the document management service 143 sends the received stored document to the network service 142. Then, the process control moves to step S42.

At step S42, the network service 142 sends the stored document or the corresponding Web page to the network device 120 via httpd 141 of NCS 31 and the network 130.

In an alternative embodiment of the present invention, the process control may move to step S41' after step S40.

At step S41', the document management service 143 may send the received stored document to the network device 120 via httpd 141 of NCS 31.

In this fashion, by designating at least one of stored documents that meet the document acquisition condition, the user can acquire the desired stored document from the multifunctional machine 1 by manipulating the browser 121.

In addition, since the multifunctional machine 1 makes effective use of a session ID and an HTTP session ID as illustrated in FIG. 3, it is possible to prevent unnecessary transmission of stored document data themselves. As a result, it is possible to prevent wasteful use of the hardware set 4 of the multifunctional machine 1 and network resources.

Additionally, since session information includes information on authenticated stored documents, it is possible to prevent unnecessary password authentication for each document acquisition request. As a result, it is possible to reduce user's manipulation. Furthermore, the session information is invalidated after a predetermined time has passed since creation of the session information. As a result, the above-mentioned stored document acquisition method is effective on security.

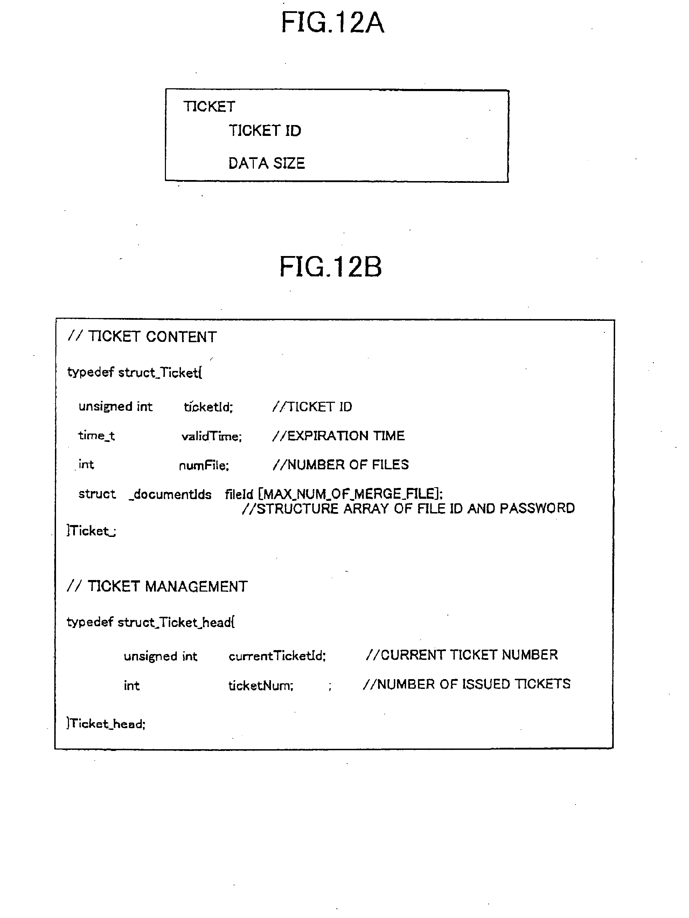

In the stored document acquisition method according to the third embodiment, a session ID and session information of a session established between the document management service 143 and the network service 142 is used to indicate authenticated stored documents. However, a document ticket as illustrated in FIGS. 12A and 12B may be used instead of such a session ID and session information.

A description is given, with reference to FIGS. 12A and 12B, of an exemplary document ticket according to the present invention. FIG. 12A shows an exemplary structure of such a document ticket transmitted between the network service 142 and the document management service 143. The document ticket comprises a ticket ID and a data size thereof. FIG. 12B shows a document ticket information. The document management service 143 maintains such document ticket information. The document ticket information comprises document ticket content information and document ticket management information. The document ticket content information comprises a ticket ID, an expiration time thereof, the number of authenticated stored document files, and a document ticket structure array. Each of the document ticket structures is formed of a pair of a file ID (document ID) and a password. On the other hand, the document ticket management information comprises a current ticket ID and the number of issued document tickets. The document ticket ID is used to associate the document ticket with the document ticket information.

For instance, when a password is successfully authenticated for a document ID, the document management service 143 creates a document ticket. Such a document ticket can be used to indicate authenticated stored documents because the document ticket has a document ticket structure array.

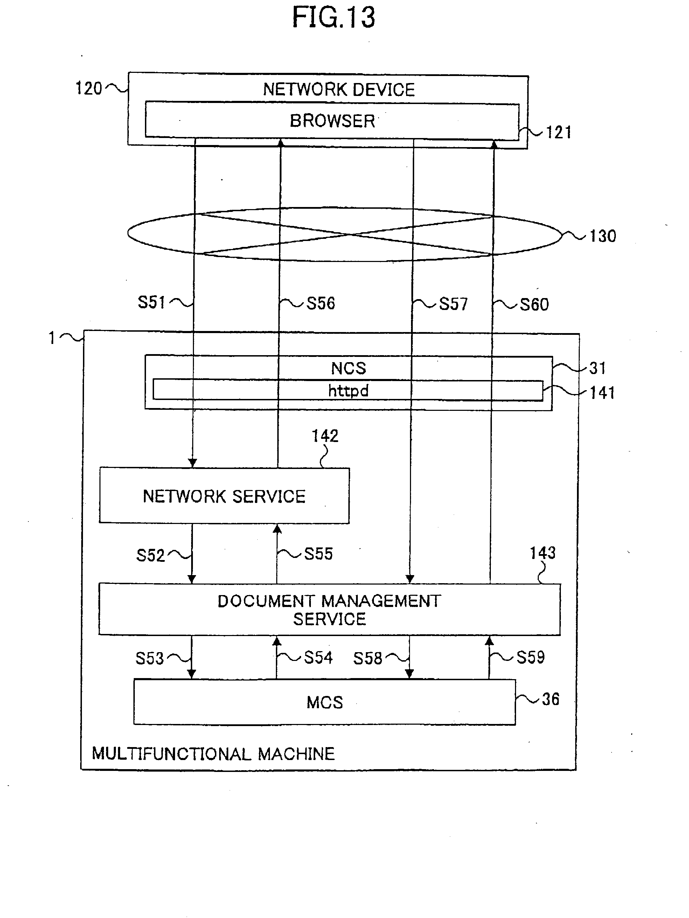

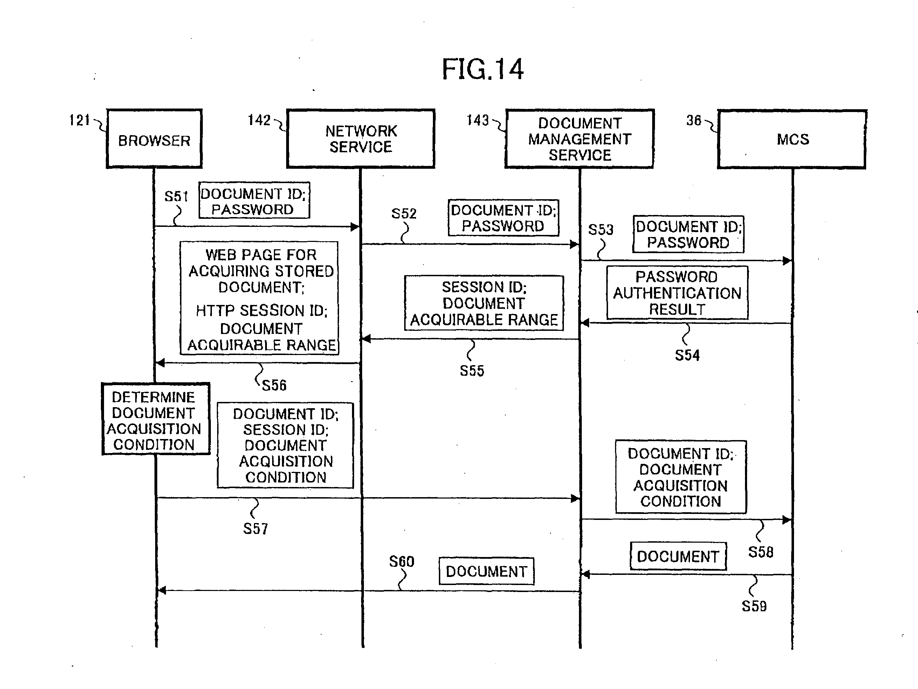

A description is given, with reference to FIG. 13 through FIG. 18, of a stored document acquisition method, which is implemented by the above-mentioned multifunctional machine 1, according to a fourth embodiment of the present invention. FIG. 13 is a diagram for explaining a stored document acquisition method according to the fourth embodiment of the present invention. FIG. 14 is a sequence diagram of the stored document acquisition method according to the fourth embodiment. Here, it is noted that components of the multifunctional machine 1 unnecessary to explain the stored document acquisition method are omitted in FIG. 13 and FIG. 14.

In the stored document acquisition method, a network device 120, which is connected to the multifunctional machine 1 via a network 130 such as the Internet, attempts to acquire a stored document, that is, a document file stored in the multifunctional machine 1.

Referring to FIG. 13 and FIG. 14, it is supposed that a browser 121 of the network device 120 has obtained a list of stored documents in the multifunctional machine 1 and document IDs thereof in advance, for example, by means of an HTTP request and an HTTP response. A user of the network device 120 selects at least one desired stored document from the listed stored documents with reference to the list displayed in the browser 121. At the same time, if the user needs to input a password so as to acquire the desired stored document, the user provides the password to the browser 121. Specifically, in order to acquire the stored document from the multifunctional machine 1, for example, the user clicks a mouse or the like on a predetermined button displayed on the browser 121.

At step S51, the browser 121 creates an HTTP request including both a document ID of a selected stored document and a password, and sends the created HTTP request to the multifunctional machine 1 via the network 130. The HTTP request is delivered to a network service 142 of the multifunctional machine 1 via httpd 141 of NCS 31 Then, the process control of the stored document acquisition method moves to step S52.

At step S52, the network service 142 retrieves the document ID and the password from the HTTP request, and sends the document ID and the password to a document management service 143. Then, the process control moves to step S53.

At step S53, the document management service 143 sends the received document ID and password to MCS 36 to authenticate the password. MCS 36 authenticates the password based on the received document ID and password sent from the document management service 143. Then, the process control moves to step S54.

At step S54, MCS 36 sends the password authentication result to the document management service 143. If the password is successfully authenticated, the document management service 143 associates the document ID with a session ID of a session established between the document management service 143 and the network service 142, and creates session information, for example, as illustrated in FIGS. 5A and 5B.

The document management service 143 maintains session information. Such session information comprises session content information and session management information. The session content information comprises a session ID, an expiration time of the session, the number of authenticated store documents, and a file ID-password structure array. Each of the file ID-password structures is formed of a pair of a file ID, which is used as a requested document ID, and a password. On the other hand, the session management information comprises a current-session ID and the number of issued sessions. Here, the file ID-password structure array represents authenticated stored documents in this session.

For each session established between the document management service 143 and the network service 142, the document management service 143 can use the session ID and the session information to manage stored documents authenticated in the session. In other words, the session ID works as certification indicating that the stored documents have been authenticated. In the stored document acquisition method according to this embodiment, after a predetermined time has passed since creation of session information, the session information is invalidated for security measures. Then, the process control moves to step S55.

At step S55, the document management service 143 sends the session ID and document acquirable range information, which is described below, to the network service 142. After receipt of the session ID and the document acquirable range information, the network service 142 creates display data that the network device 120 uses to create a Web page for acquiring at least one stored document. The display data include the session ID and the document acquirable range information sent from the document management service 143. The document acquirable range information comprises a document image format and a page number of the desired stored document. In an alternative embodiment of the present invention, the document acquirable range information may include a component of a stored document that a user can acquire with high possibility corresponding to a document ID sent from the network device 120 at step S51. The process control moves to step S56.

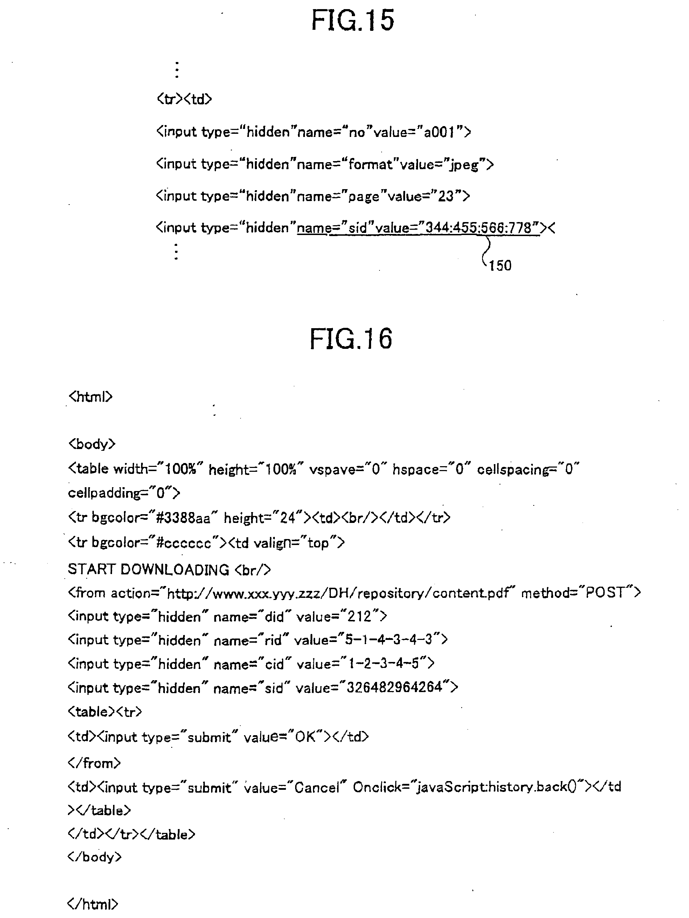

At step S56, the network service 142 sends the created display data to the browser 121 via httpd 141 of NCS 31 and the network 130. For instance, the display data include the session ID in the form as illustrated in FIG. 15.

FIG. 15 is a diagram for explaining an exemplary session ID in display data according to the embodiment of the present invention. As shown in FIG. 15, an exemplary underlined portion 150 "name="sid" value="344:455:566:778"", which represents a session ID, is embedded in display data. Here, it is noted that document acquirable range information, together with the session ID, is embedded in the display data.

The browser 121 displays a Web page for acquiring at least one stored document based on the received display data. When the user selects a stored document from the displayed list of authenticated stored documents, the browser 121 displays a document acquisition condition selection screen as illustrated in FIG. 7.

In the document acquisition condition selection screen, the user is prompted to determine a document image format and a page number, which are exemplary document acquisition conditions, of a desired stored document. For instance, the user can select PDF or JPEG as the document image format in FIG. 7. After the user determines such document acquisition conditions in the displayed document acquisition condition selection screen, the process control moves to step S57.

At step S57, the browser 121 creates an HTTP request including the document ID of the selected stored document, the session ID provided at step S56, and the document acquisition conditions determined on the document acquisition condition selection screen, and sends the created HTTP request to the multifunctional machine 1 via the network 130. The HTTP request is delivered to the document management service 143 of the multifunctional machine 1 via httpd 141 of NCS 31.

Furthermore, steps S56 and S57 are described in detail with reference to FIG 16 through FIG. 18.

At step S56, the network service 142 sends display data, as illustrated in FIG. 16, to the browser 121 via httpd 141 and the network 130.

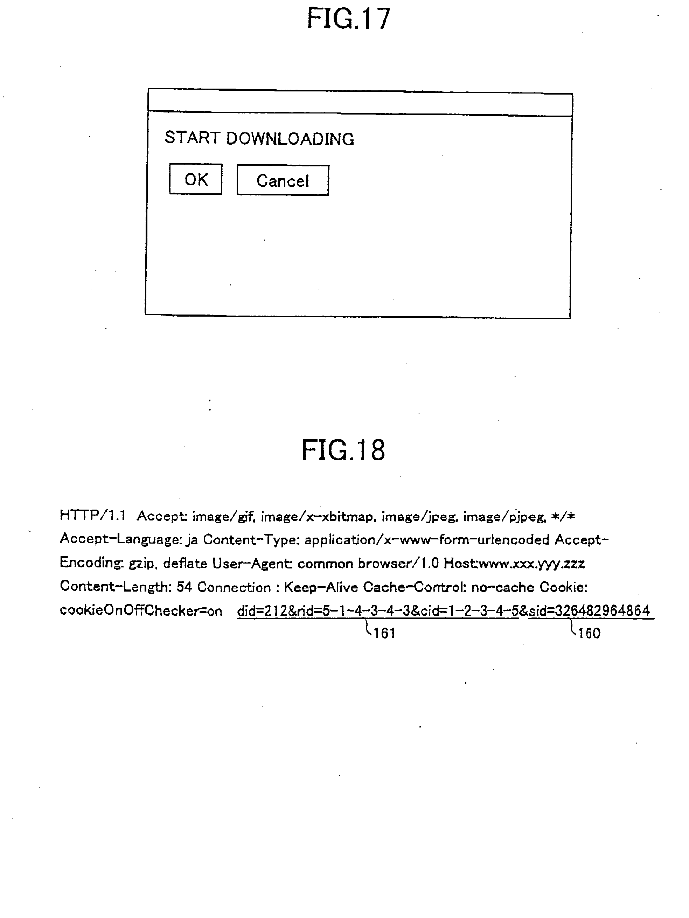

FIG. 16 is a diagram for explaining exemplary display data in which a session ID is embedded. Referring to FIG. 15, the character sequence "name="sid" value="326482964254"". which represents a session ID, is embedded in the illustrated display data wherein the session ID is provided as a "hidden" type. In addition, the display data includes other data: "name="did" value="212"" indicative of a document ID, "name="rid" value="5-1-4-3-4-3"" indicative of a document image format, and "name="cid" value="1-2-3-4-5"" indicative of a page number wherein these data are also provided as the "hidden" type. For instance, such a combination of a document ID, a document image format and a page number may constitute document acquirable range information. By using the display data in FIG. 16, the browser 121 displays a Web page for acquiring a stored document, as illustrated in FIG. 17.

FIG. 17 is a diagram illustrating an exemplary Web page for acquiring a stored document. When the user clicks an input device such as a mouse on the illustrated "OK" button in the Web page in the browser 121, the process control moves to step S57.

At step S57, the browser 121 uses the display data to create an HTTP request as illustrated in FIG. 18.

FIG. 18 is a diagram for explaining an exemplary HTTP request including the above-mentioned session ID. Referring to FIG. 18, the underlined character sequence 160 of " sid=326482964264", which is indicative of the session ID in FIG. 16, is embedded in the HTTP request. In addition, the HTTP request includes underlined other data 161: "did=212" indicative of the document ID, "rid=5-1-4-3-4-3" indicative of a document image format, and "cid=1-2-3-4-5" indicative of a page number of the stored document.

The browser 121 sends the created HTTP request to the multifunctional machine 1 via the network 130. The HTTP request is supplied to the document management service 143 via httpd 141.

The document management service 143 determines validity of the session ID based on the document ID, the session ID and the document acquisition conditions in the received HTTP request. The validity can be determined based on the session information associated with the session ID. If the session ID is determined to be valid, the process control moves to step 558.

At step S58, the document management service 143 sends the document ID and the document acquisition conditions to MCS 35 so as to request the desired stored document.

MCS 36 uses the received document ID and document acquisition conditions to fetch the stored document, for example, from HDD 68. The process control moves to step S59.

At step S59, MCS 36 sends the stored document to the document management service 143. Then, the process control moves to step S60.

At step S60, the document management service 143 sends the received stored document to the network device 120 via httpd 141 of NCS 31 and the network 130. The network device 120 displays the received stored document in the browser 121.

In this fashion, by designating at least one of stored documents that meet a given document acquisition condition through the browser 121, the user can acquire the desired stored document. In addition, since the multifunctional machine 1 makes effective use of a session ID and an HTTP session ID as illustrated in FIG. 13, it is possible to prevent unnecessary transmission of stored document data themselves. As a result, it is possible to prevent wasteful use of the hardware set 4 of the multifunctional machine 4 and network resources.

Additionally, since session information includes information on an authenticated stored document, it is unnecessary to perform password authentication for each document acquisition request. As a result, it is possible to reduce user's manipulation. Furthermore, the session information is invalidated after a predetermined time has passed since creation of the session information. As a result, the above-mentioned stored document acquisition method is effective on security.

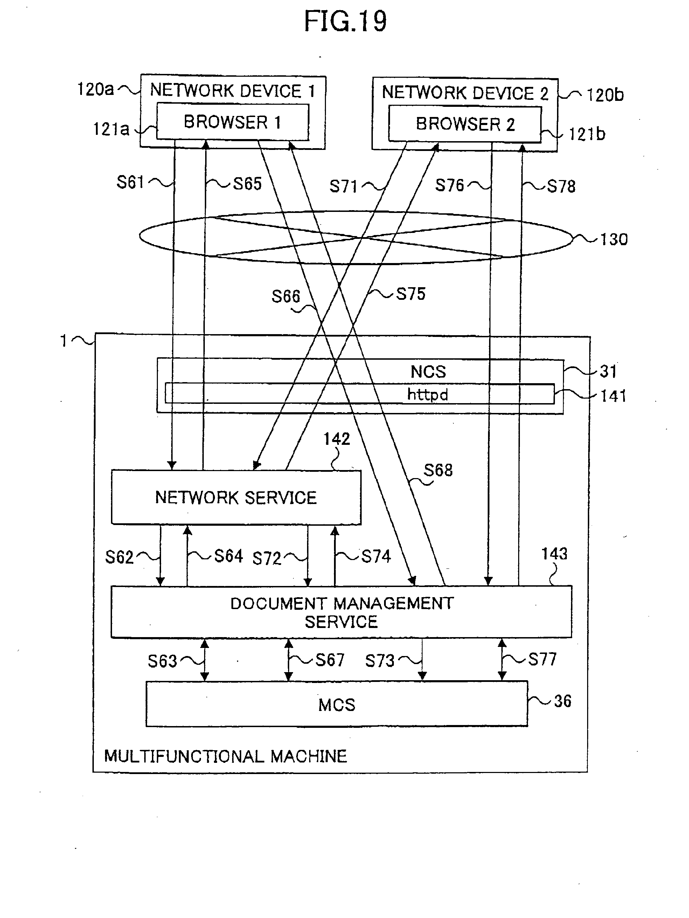

A description is given, with reference to FIG. 19, of a stored document acquisition method according to a fifth embodiment of the present invention. FIG. 19 is a diagram for explaining a stored document acquisition method according to the fifth embodiment. According to the stored document acquisition method, a plurality of network devices 120a and 120b, which are connected to the multifunctional machine 1 via the network 130, can acquire a stored document from the multifunctional machine 1.

Here, it is noted that components unnecessary for the description are omitted in FIG. 19. In addition, since steps S61 through S68 and S71 through S78 are the same as the above-mentioned steps S51 through S60, how the network devices 120a and 120b actually acquire a stored document from the multifunctional machine 1 is intensively described.

After the document management service 143 is informed from MCS 36 that a password is successfully authenticated for a document ID, the document management service 143 creates session information and a session ID to identify the session information of a session established between the document management service 143 and the network service 142. Also, after receipt of the session ID from the document management service 143, the network service 142 manages the session ID in association with a network device that has issued an HTTP request.

Referring to FIG. 19, for instance, if the network service 142 is informed that a password has been successfully authenticated for a document ID at step 63, the network service 142 manages a session ID in association with the network device 120a that issued an HTTP request at step S61. Also, if the network service 142 is informed that a password is successfully authenticated for a document ID at step S73, the network service 142 manages a session ID in association with the network device 120b that issued an HTTP request at step S71.

Normally, the network service 142 manages created session ID in association with the network devices 120a or 120b that provides an HTTP request at step S61 or S71.

Accordingly, when the network device 120a or 120b issues a process request of some kind for a stored document to the network service 142, the network service 142 can make use of a session ID corresponding to the network device 120a or 120b that has issued the process request.

Here, if the network device 120a or 120b expects to acquire a stored document itself rather than a Web page for displaying the stored document, the network device 120a or 120b has to issue such an acquisition request directly to the document management service 143, for example, at step 566 or S76. In this case, a session ID in association with the network device 120a or 120b cannot be used because the network service manages the session ID. Thus, it is necessary to authenticate a password for the stored document one more time.

In order to avoid such duplication, the session ID is embedded in display data sent to the network device 120a or 120b at step S65 or S75, respectively, in the stored document acquisition method according to the fifth embodiment. As a result, the network device 120a or 120b can use the session ID to issue the acquisition request directly to the document management service 143 at step 566 or S76, respectively-According to the above-mentioned stored document acquisition method, it is possible to prevent duplication of password authentication for each document acquisition request. Thus, it is possible to reduce user's manipulation.

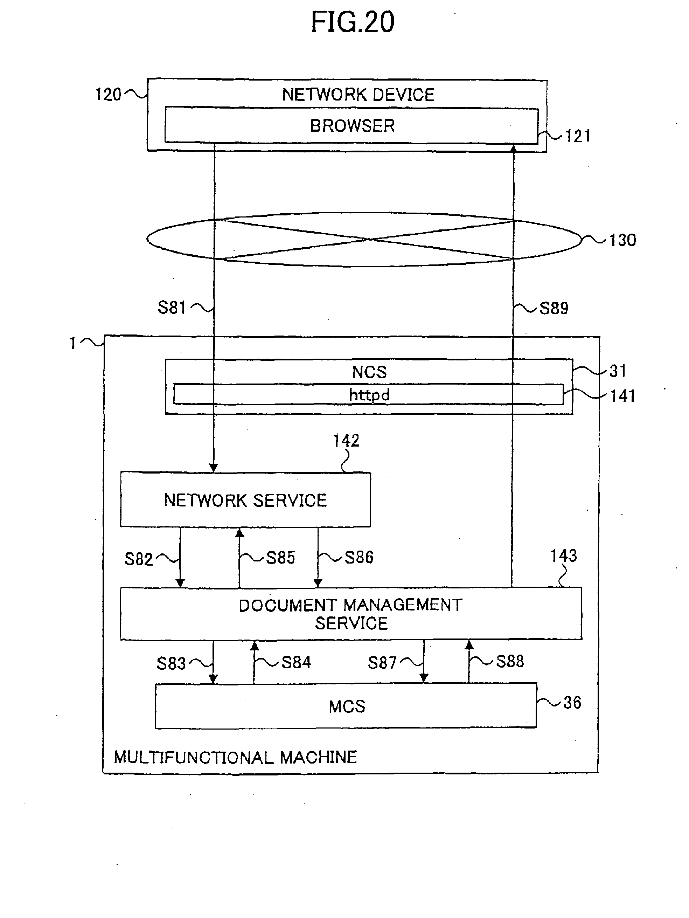

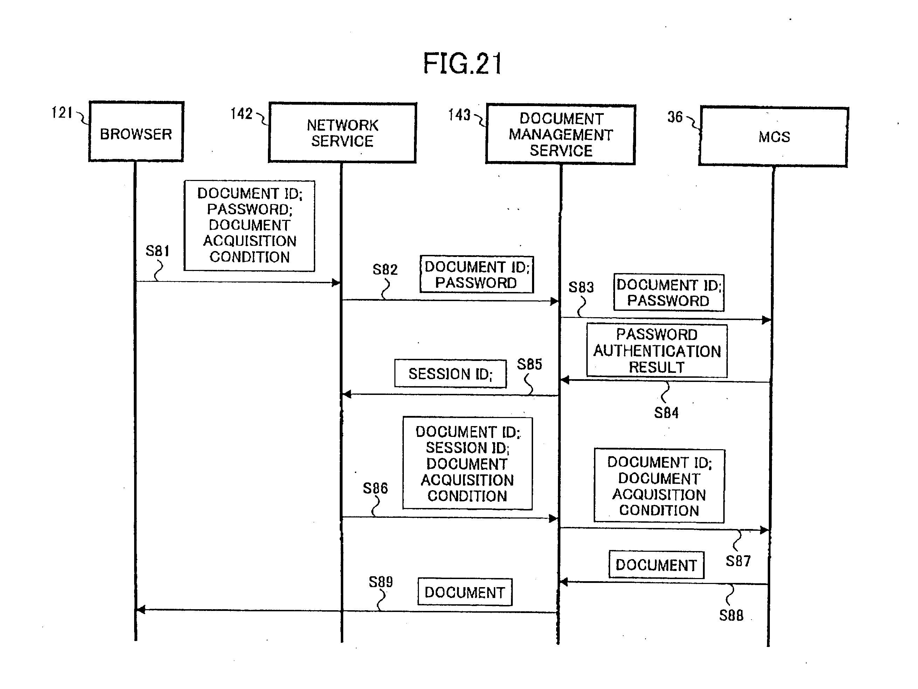

A description is given, with reference to FIG. 20 and FIG. 21, of a stored document acquisition method according to a sixth embodiment of the present invention. FIG. 20 is a diagram for explaining a stored document acquisition method according to the sixth embodiment. FIG. 21 is a sequence diagram of the stored document acquisition method. In the stored document acquisition method according to the sixth embodiment, the network device 120, which is connected to the multifunctional machine 1 via the network 130, attempts to acquire a stored document in the multifunctional machine 1. Here, it is noted that components unnecessary for the description are omitted in FIG. 20 and FIG. 21.

At. step S81, the browser 121 of the network device 120 creates an HTTP request including a document ID, a password and a document acquisition condition of a stored document selected by a user, and sends the created HTTP request to the multifunctional machine 1 via the network 130. The HTTP request is delivered to the network service 142 via httpd 141 of NCS 31. The process control of the stored document acquisition method moves to step S82.

At step S82, the network service 142 retrieves the document ID, the password and the document acquisition condition from the received HTTP request, and sends the document ID and the password to the document management service 143. The process control moves to step S83.

At step S83, the document management service 143 sends the received document ID and password to MCS 36 to authenticate the password. MCS 36 authenticates the password based on the received document ID and password sent from the document management service 143. Then, the process control moves to step S84.

At step 584, MCS 36 sends the password authentication result to the document management service 143. If the password is successfully authenticated, the document management service 143 associates the document ID with a session ID of a session established between the document management service 143 and the network service 142, and creates session information, for example, as illustrated in FIGS. 5A and 5B. Then, the process control moves to step S85.

At step S85, the document management service 143 sends the session ID to the network service 142. The process control moves to step S86.

At step 586, the network service 142 sends the session ID, the document ID and the document acquisition condition to the document management service 143.

The document management service 143 acquires the document ID, the session ID and the document acquisition condition, and determines validity of the session ID. For instance, the validity of the session ID can be determined based on the session information associated with the session ID. If the session ID is determined to be valid, the process control moves to step S87.

At step S87, the document management service 143 sends the document ID and the document acquisition condition to MCS 36 so as to request the desired stored document. Based on the received document ID and document acquisition condition, MCS 36 fetches the stored document, for example, from HDD 68. Then, the process control moves to step S88.

At step S88, MCS 36 sends the stored document to the document management service 143. Then, the process control moves to step S89.

At step S89, the document management service 143 sends the received stored document to the network device 120 via httpd 141 of NCS 31. For instance, the network device 120 displays the received stored document in the browser 121.

Thus, by designating at least one of stored documents that meet the document acquisition condition, the user can acquire the desired stored document from the multifunctional machine 1 by manipulating the browser 121.

In addition, since the multifunctional machine 1 makes effective use of a session ID in accordance with the above-mentioned stored document acquisition method, it is possible to prevent unnecessary transmission of stored document data themselves. As a result, it is possible to prevent wasteful use of the hardware set 4 of the multifunctional machine 1 and network resources.

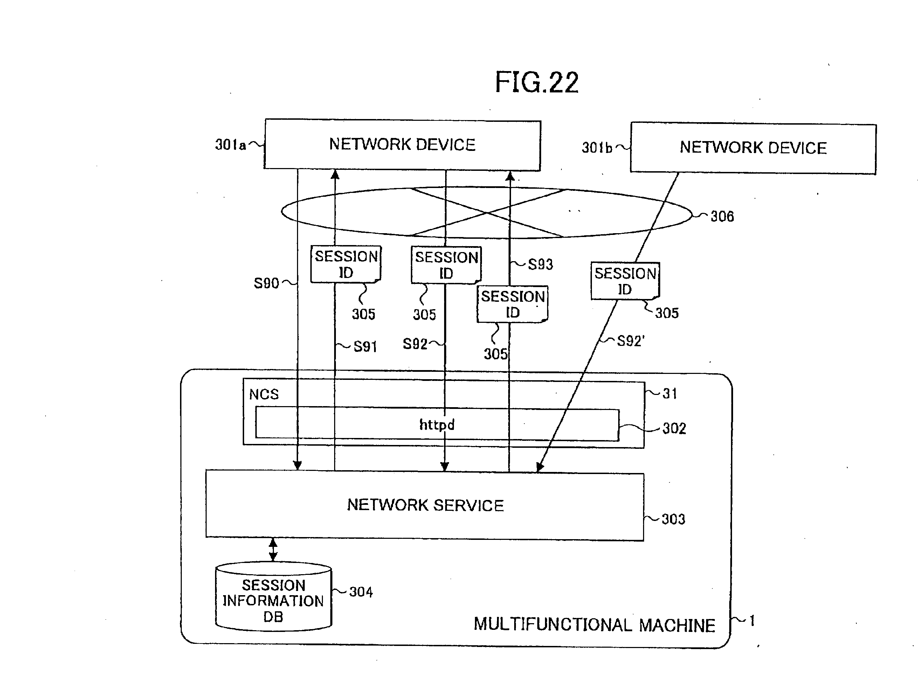

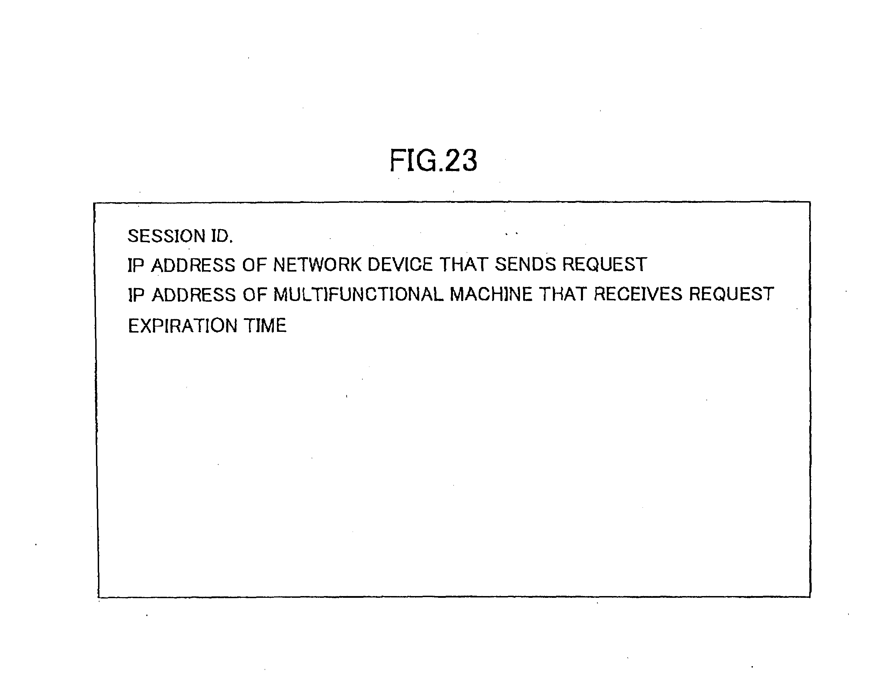

A description is given, with reference to FIG. 22 and FIG. 23, of an access authentication information generation method, which is implemented by the multifunctional machine 1 described with reference to FIG. 1 and FIG. 2, according to a seventh embodiment of the present invention. FIG. 22 is a diagram for explaining an access authentication information generation method according to the seventh embodiment of the present invention. Here, it is noted that components of the multifunctional machine 1 unnecessary to explain the access authentication information generation method are omitted in FIG. 22.

In FIG. 22, network devices 301a and 301b are connected to the multifunctional machine 1 via a network 306 such as the Internet and LAN (Local Area Network). The multifunctional machine 1 can offer a variety of services to the network devices 301a and 301b. In order to use such a service, the network devices 301a and 301b receive a session ID, which serves as access authentication information to use the service, from the multifunctional machine 1, and receive the service through the access authentication information.

Specifically, data and information are communicated, for example, in XML (eXtensible Markup Language) form as appreciated by those skilled in the art, between the multifunctional machine 1 and the network devices 301a and 301b. Here, the multifunctional machine 1 and the network devices 310a and 310b comply with a common communication protocol, for example, SOAP (Simple Object Access Protocol) as a data access protocol.

At step S90, in order to use a service offered by the multifunctional machine 1, the network device 301a requests a network service 303 of the multifunctional machine 1 via the network 306 and httpd 302 of NCS 31 to establish a session between the network device 301a and the network service 303. The request includes authentication information. Through the authentication information, the network service 303 is allowed to issue access authentication information to use the service. Alternatively, the network device 301a may designate an expiration time of the session at step S90. The process control moves to step S91.

At step S91, the network service 303 establishes the session between the network device 301a and the network service 303, and determines whether or not the authentication information included in the request is valid. If the authentication information is successfully authenticated, the network service 303 creates session information, as illustrated in FIG. 23, of the session and stores the created session information in a session information DB 304. On the other hand, if the authentication information is not authenticated, the network service 303 may release the session established between the network device 301a and the network service 303.

FIG. 23 shows an exemplary structure of session information. The session information in FIG. 23 comprises a session ID, an IP (Internet Protocol) address of a transmitter (network device) that issues a request to establish a session, an IP address of a receiver (multifunctional machine) that receives the request, and an expiration time.

The session ID is an identifier to identifying session information. In the embodiment shown in FIG. 22, the IP address of a transmitter is the IP address of the network device 301a or 301b that requests to establish a session, and the IP address of a receiver is the IP address of the multifunctional machine 1 that receives the request. The expiration time means a time until which the session information is valid. As described below, the expiration time may be updated whenever the session ID is used. In this case, it is possible to prolong the expiration time of the session information before the session information expires.

The network service 303 sends a session ID 305, which serves as a answer of the request at step S91, to the network device 301a via httpd 302 of NCS 31 and the network 306. After the network device 301a receives the session ID 305 from the network service 303, the process control moves to step S92.

At step S92, the network device 301a sends a desired process request and the session ID 305 to the network service 303 via the network 306 and httpd 302.

In response to receipt of the process request and the session ID 305 from the network device 301a, the network service 303 searches the session information DB 304 for the session information corresponding to the session ID 305. If the network service 303 can find the corresponding session information in the session information DB 304, the network service 303 determines that the session corresponding to the session ID has been established between the network device 301a and the network service 303.

Then, the network service 303 retrieves the IP address of the transmitter from the session information, and determines whether or not the IP address of the transmitter, which is obtained from the session information, and the IP address of the network device 301a, which sends the process request at step S92, are the same. If these IF addresses are the same, the network service 303 fulfills the process request from the network device 301a. Then, the process control moves to step S93.

At step 593, the network service 303 sends the process result and the session ID 305 to the network device 301a via the network 306 and httpd 302 of NCS 31.

On the other hand, if the network service 303 cannot find the session information corresponding to the session ID in the session information DB 304, the network service 303 determines that the session has not been established between the network device 301a and the network service 303, and does not fulfill the process request from the network device 301a. Furthermore, if the IP address of the transmitter and the IP address of the network device 301a are not the same, the network service 303 does not also fulfill the process request of the network device 301a.

In this manner, session information works as access authentication information to verify access authority of a service offered by the network service 303. According to the above-mentioned access authentication information generation method, there are some advantages as described below.

For instance, the session information is useful to deny an illegal process request. In the above-mentioned situation, it is supposed that the network device 301b can refer to the session ID 305 possessed by the network device 301a in some way and then sends a desired process request, together with the session ID 305 of the network device 301a, to the network service 303 as at step S92' in FIG. 22.

In respond to receipt of the session ID and the process request from the network device 301b, the network service 303 searches the session information DB 304 for the session information corresponding to the session ID. In this case, since the session information is stored in the session information DB 304 as described above, the network service 303 determines that the session has been established between the network device 301b and the network service 303.

Then, the network service 303 retrieves the IP address of the transmitter from the session information, and determines whether or not the IP address of the transmitter (network device 301a) and the IP address of the network device 301b, which sends the process request at step S12', are the same. Of course, these addresses are not the same. Accordingly, the network service 303 rejects the process request from the network device 301b. In addition, session information includes an expiration time. After the expiration time passes, the session information is discarded. In this fashion, the access authentication information generation method according to the present invention can further strengthen security for multifunctional machines and network devices.

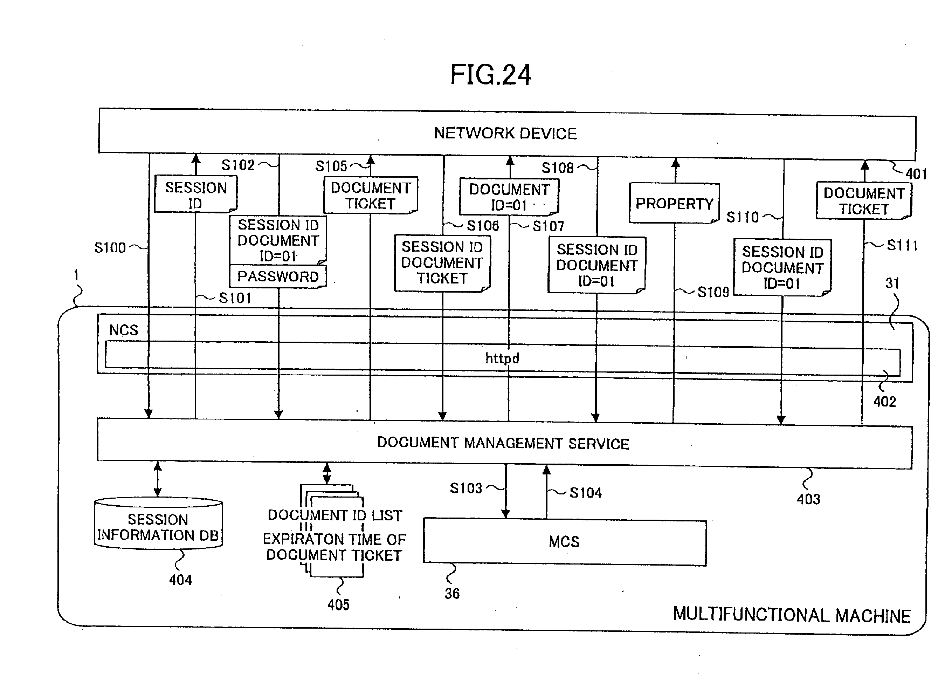

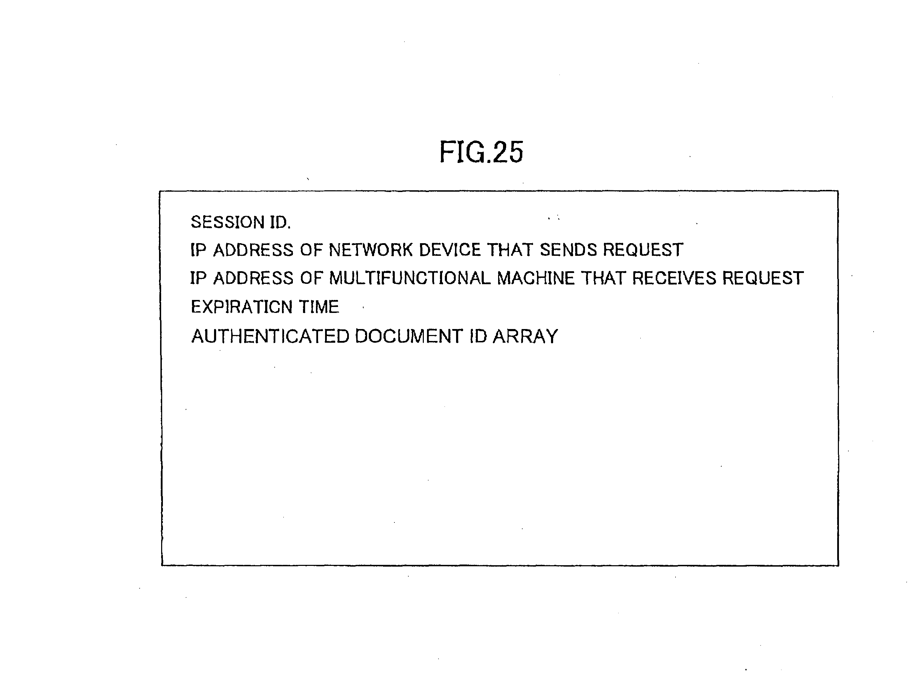

A description is given, with reference to FIG. 24 and FIG. 25, of an access authentication information generation method according to an eighth embodiment of the present invention. FIG. 24 is a diagram for explaining an access authentication information generation method according to the eighth embodiment of the present invention. Here, it is noted that components of the multifunctional machine 1 unnecessary to explain the access authentication information generation method are omitted in FIG. 24.

In FIG. 24, a network device 401 is connected to the multifunctional machine 1 via a network (not illustrated) such as the Internet and LAN (Local Area Network). The multifunctional machine 1 offers to the network device 401 a variety of services on stored documents. In order to use such a service, the network device 401 receives a session ID, which serves as access authentication information to use the service, from the multifunctional machine 1, and receives the service through the access authentication information.

Similarly to the above-mentioned network devices 301a and 301b, data and information are communicated, for example, in XML form as appreciated by those skilled in the art, between the multifunctional machine 1 and the network device 401. Here, the multifunctional machine 1 and the network device 401 complies with a common communication protocol, for example, SOAP as a data access protocol.

At step S100, in order to use a service offered by the multifunctional machine 1, the network device 401 requests a document management service 403 of the multifunctional machine 1 via the network and httpd 402 of NCS 31 to establish a session between the network device 401 and the document management service 403. The request includes authentication information required to cause the document management service 403 to issue access authentication information to use the service offered by the document management service 403. Alternatively, the network device 401 may designate an expiration time of the session at step S100. The process control moves to step S101.

At step S101, the document management service 403 establishes the session between the network device 401 and the document management service 403, and determines whether or not the authentication information included in the request is valid. If the authentication information is successfully authenticated, the document management service 403 creates session information, as illustrated in FIG. 25, of the session and stores the created session information in a session information DB 404. On the other hand, if the authentication information is not authenticated, the document management service 403 may release the session established between the network device 401 and the document management service 403.

FIG. 25 shows an exemplary structure of session information. Referring to FIG. 25, the session information comprises a session ID, an IP (Internet Protocol) address of a transmitter (network device) that issues a session setting request, an IF address of a receiver (multifunctional machine) that receives the session setting request, an expiration time, and an authenticated document ID array.

The session ID, the IP address of a transmitter, the IP address of a receiver, and the expiration time are not described here because these components are the same as those of the above-mentioned exemplary session information in FIG. 23. The authenticated document ID array is an array of document IDs whose passwords have been successfully authenticated.

The document management service 403 sends a session ID, which serves as a reply of the request at step S101, to the network device 401 via httpd 402 of NCS 31 and the network. After the network device 401 receives the session ID from the document management service 403, the network device 401 displays a list of stored documents in the multifunctional machine 1. Here, it is supposed that the network device 401 obtains the list of the stored documents and the document IDs thereof in advance. A user of the network device 401 selects a desired stored document from the listed stored documents. At the same time, if the user needs to input a password so as to acquire the desired stored document, the user provides the password to the network device 401. The process control moves to step S102.

At step S102, the network device 401 requests a document ticket, which serves as access authentication information for the selected stored document, by sending the document ID of the stored document, the password and the session ID to the document management service 403 via httpd 402.

In response to receipt of the document ID, the password and the session ID from the network device 401, the document management service 403 searches a session information DB 404 for session information corresponding to the received session ID. If the document management service 403 can find the corresponding session information in the session information DB 404, the document management service 403 determines that the session has been established between the network device 401 and the document management service 403.

Then, the document management service 403 retrieves the IP address of the transmitter from the session information, and determines whether or not the IP address of the transmitter and the IP address of the network device 401, which requests the document ticket, are the same. If these IP addresses are the same, the document management service 403 determines that the session between the document management service 403 and the network device 401 is valid, and updates the expiration time of the session information corresponding to the session ID.

On the other hand, if the corresponding session information is not stored in the session information DB 404, the document management service 403 determines that the session has been not established between the document management service 403 and the network device 401, and does not fulfill the request for the document ticket from the network device 401.

Also, if the IP address of the transmitter, which is retrieved from the session information, and the IF address of the network device 401 are not the same, the document management service 401 does not also fulfill the request for the document ticket from the network device 401.

If the document management service 403 determines that the session between the document management service 403 and the network device 401. is valid, the document management service 403 determines whether or not the received document ID is included in the authenticated document ID array of the session information. In the following, it is supposed that the document ID is not included in the authenticated document ID array, and this case is intensively described.

In this case, the document management service 403 determines that the stored document corresponding to the received document ID is unavailable, and the process control moves to step S103.

At step S103, the document management service 403 forwards the document ID and the password for the stored document from the network device 401 to MCS 36 so as to request MCS 36 to authenticate the password for the document ID- MCS 36 authenticates the password for the received document ID. The process control moves to step S104.

At step S104, MCS 36 sends the authentication result to the document management service 403. This authentication result works as a reply to the password authentication request. If the password is successfully authenticated, the document management service 403 adds the document ID to the authenticated document ID array.

Furthermore, if the password is successfully authenticated, the document management service 403 creates a document ticket as illustrated in FIGS. 12A and 12B.

The document management service 403 maintains document ticket information 405. The document ticket information 405 comprises document ticket content information and document ticket management information. The document ticket content information comprises a ticket ID, an expiration time, the number of authenticated stored document files, a file ID-password structure array. In the file ID-password structure array, each file ID-password structure is formed of a pair of a file ID (document ID) and a password. The document ticket management information comprises a current number and the number of issued document tickets. Here, a document ticket is associated with document ticket information 405 through a ticket ID thereof. The process control moves to step S105.

At step S105, the document management service 403 sends the created document ticket to the network device 401 via httpd 402 and the network. For instance, if the network device 401 attempts to obtain a document ID (file ID) in the document ticket, the process control moves to step S106.

At step S106, the network device 401 sends the session ID and the document ticket received at steps S101 and S105, respectively, to the document management service 403 via httpd 402 so as to request the document ID in the document ticket.

When the document management service 403 receives the session ID and the document ticket from the network device 401, the document management service 403 searches the session information DB 404 for session information corresponding to the session ID. If the corresponding session information is stored in the session information DB 404, the document management service 403 determines that the session has been established between the network device 401 and the document management service 403.

Then, the document management service 403 retrieves the IP address of the transmitter from the session information, and the process control moves to step S106.

At step S106, the document management service 403 determines whether or not the IP address of the transmitter and the IP address of the network device 401, which requests the document ID in the document ticket, are the same.

If these IP addresses are the same, the document management service 403 determines that the session between the document management service 403 and the network device 401 is valid. If the session is determined to be valid, the process control moves to step S107.

At step S107, the document management service 403 sends the document ID in the document ticket to the network device 401 via httpd 402 and the network. Furthermore, the document management service 403 updates an expiration time of the session information corresponding to the session ID.

On the other hand, if the corresponding session information is not stored in the session information DB 404, the document management service 403 determines that the session has not been established between the document management service 403 and the network device 401. In this case, the document management service 403 does not fulfill the request for the document ID that the network device 401 issues.

Alternatively, for instance, if the network device 401 wants to acquire property information of a desired stored document, the process control moves to step S108.

At step S108, the network device 401 sends the session ID and the document ID received at steps S101 and S107, respectively, to the document management service 403 via httpd 402 so as to request the property information of the stored document. When the document management service 403 receives the session ID and the document ID from the network device 401, the document management service 403 determines validity of the session between the document management service 403 and the network device 401 as in step S106.

If the document management service determines that the session is valid, the document management service 403 further determines whether or not the received document ID is included in the authenticated document ID array in the session information. In the following, it is supposed that the document ID is included in authenticated document ID, and the case is intensively described.

In this case, the document management service 403 determines that access to the stored document corresponding to the document ID is authenticated, and the process control moves to step S109.

At step S109, the document management service 403 sends the property information of the corresponding stored document to the network device 401 via httpd 402 and the network.

Alternatively, for instance, if the network device 401 requests a document ticket again, the process control moves to step S110.

At step S110, the network device 401 sends the document ID of a desired stored document and the session ID received at step S21 to the document management service 403 via httpd 402 so as to request a document ticket again.

In response to receipt to the session ID and the document ID from the network device 401, the document management service 403 determines validity of the session between the document management service 403 and the network device 401 as in step S106. If the document management service 403 determines that the session is valid, the document management service 403 further determines whether or not the document ID is included in the authenticated document ID array of the session information. In the following, it is supposed that the document ID is included in the authenticated document ID array of the session information, and this case is intensively described.

In this case, the document management service 403 determines that access to the stored document corresponding to the received document ID is authenticated, and creates a document ticket as illustrated in FIGS. 12A and 12B. The process control moves to step S111.

At step S111, the document management service 403 sends the created document ticket to the network device 401 via httpd 402 and the network.

According to the above-mentioned access authentication information generation method, when a document ID of an authenticated stored document is stored in an authenticated document ID array of session information, it is possible to offer a document ticket without password authentication.

In addition, when an authenticated document ID array is in session information, there are some advantages. For instance, if a process is requested for a stored document protected through a password, it is necessary to send the password to the document management service 403 so as to authenticate the password. For this reason, if several processes are sequentially requested for such a store document, it may be necessary to authenticate the password many times.

According to the above-mentioned access authentication information generation method, once the password is successfully authenticated for a stored document, the document ID of the authenticated stored document is added to an authenticated document ID array of session information. As a resutl, it is possible to omit password authentication for the next process request for the stored document.

According to above-mentioned access authentication information generation method, since it is unnecessary to duplicate password authentication, it is possible to increase the processing speed.

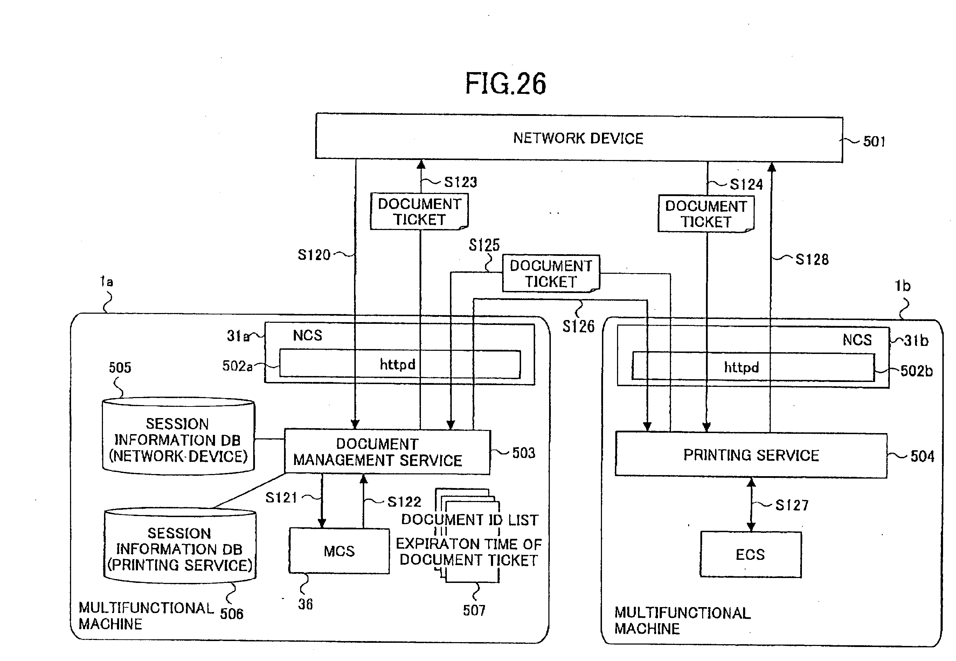

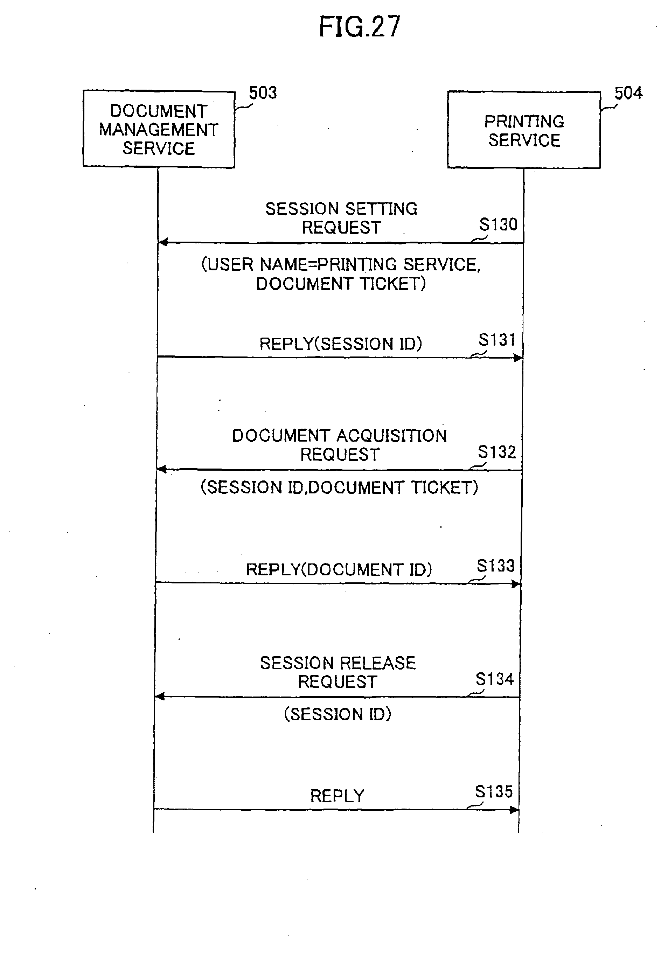

A description is given, with reference to FIG. 26 and FIG. 27, of an access authentication information generation method according to a ninth embodiment of the present invention. FIG. 26 is a diagram for explaining an access authentication information generation method according to the ninth embodiment. Here, it is noted that components unnecessary to explain the access authentication information generation method are omitted in FIG. 26. According to the access authentication information generation method described below, a document management service of a multifunctional machine offers some services to another multifunctional machine, which is an embodiment of a network device, and a network device, and a description thereof is provided below.

Referring to FIG. 26, a multifunctional machine 1b and a network device 501 are connected to a multifunctional machine 1a via a network such as the Internet or LAN. The multifunctional machine 1a can offer a variety of services on a stored document to the multifunctional machine 1b and the network device 501. In order to use a service that the multifunctional machine 1a offers, the multifunctional machine 1b and the network device 501 receives a session ID as access authentication information on the service, which is described below, from the multifunctional machine 1a, and uses the access authentication information to receive the service. Here, data and information are exchanged in the XML form between the multifunctional machine 1b and the network device 501 as between the above-mentioned network devices 301a and 301b in compliance with SOAP as a communication protocol standard thereof.

In order to receive a service of the multifunctional machine 1a, the multifunctional machine 1b and the network device 501 operate in accordance with the illustrated procedure, which is described below in detail, in FIG. 26. Here, step S120 is not described herein because step S120 is similar to steps S100 through S102 in FIG. 24. In addition, steps S121 through 5123 are not also described herein because steps S121 through S123 are similar to steps 5103 through S105 in FIG. 24.

For instance, it is supposed that the network device 501 expects a printing service 504 of the multifunctional machine 1b to print a stored document corresponding to a document ID in a document ticket. In this case, the process control of the access authentication information generation method moves to step S124.

At step S124, the network device 501 sends a document ticket received at step S123 to the printing service 504 of the multifunctional machine 1b via httpd 502b of NCS 31b so as to request the multifunctional machine 1b to print the stored document corresponding to the document ID in the document ticket. Here, it is noted that a session setting request and a reply for the session setting request, which are not illustrated in FIG. 26, are issued at step S124 as in steps S100 and 5101. After the printing service 504 receives the printing request from the network device 501, the process control moves to steps S125 and S126.

At steps S125 and S126 the printing service 504 retrieves the stored document corresponding to the document ID in the received document ticket from a document management service 503 of the multifunctional machine 1a, as illustrated in FIG. 27.

FIG. 27 is a sequence diagram of such a procedure for acquiring a stored document from the document management service 503 through a document ticket.

At step S130, the printing service 504 requests the document management service 503 of the multifunctional machine 1a to establish a session between the document management service 503 and the printing service 504 of the multifunctional machine 1b via httpd 502a of NCS 31a, httpd 502b of NCS 31b and a network.

This session setting request includes the document ticket that the printing service 504 has received at step S124. The document ticket is also used as authentication information. Such authentication information is required when the document management service 503 issues access authentication information for a service offered by the document management service 503. In an alternative embodiment, the printing service 504 may designate an expiration time of the session at step S130.

The document management service 503 establishes the session between the document management service 503 and the printing service 504. At the same time, the document management service 503 performs authentication for the session setting request based on document ticket information 507 of the document ticket received at step S125.

If the authentication succeeds, the document management service 503 creates session information as illustrated in FIG. 25, and stores the created session information in session information DB 506. In addition, the document management service 503 adds the document ID in the document ticket information 507 to an authenticated document ID array of the session information.

In the above-mentioned access authentication information generation method, a document ticket is included in a session setting request, and if authentication succeeds for the session setting request, the authenticated document ID in document ticket information of the document ticket is added to the authenticated document ID array of the session information. As a result, it is possible to reuse the authenticated document ID in subsequent sessions.

On the other hand, if the authentication does not succeed, the document management service 503 creates no session information. In this case, the document management service 503 may release the session established between the document management service and the printing service 504. Then, the process control moves to step S131.

At step S131, the document management service 503 sends the session ID of the session as a replay for the session setting request to the printing service 504. After the printing service 504 receives the session ID from the document management service 503, the process control moves to step S132.

At step S132, the printing service 504 sends the document ticket received at step S124 and the session ID received at S131 to the document management service 503 so as to request a stored document.

In response to receipt of the document ticket and the session ID from the printing service 504, the document management service 503 searches session information DB 506 for session information corresponding to the received session ID. If the session information is stored in the session information DB 506, the document management service 503 determines that the session has been established between the printing service 504 and the document management service 503.

Then, the document management service 503 retrieves the IP address of the transmitter from the session information, and determines whether or not the IP address of the multifunctional machine 1b having the printing service 504 that requests the stored document at step S132 and the IP address of the transmitter are the same.

If these IP addresses are the same, the document management service 503 determines that the session between the document management service 503 and the printing service 504 is valid. In this case, the process control moves to step S133.

At step S133, the document management service 503 sends the stored document corresponding to the document ID as a replay for the stored document acquisition request at S132 to the printing service 504. In addition, the document management service 503 updates the expiration time of the session information corresponding to the session ID.

On the other hand, if the session information corresponding to the session ID is not stored in the session information DB 507, the document management service 503 determines that the session has not been established between the document management service 503 and the printing service 504, and does not fulfill the stored document acquisition request issued by the printing service 504. In addition, if the two addresses are not the same, the document management service 503 does not also fulfill the stored document acquisition request. Then, the process control moves to step S134.

At step S134, the printing service 504 sends the session ID to the document management service 503 so as to issue a session release request for the session between the document management service 503 and the printing service 504. The process control moves to step S135.

At step S135, the document management service 503 sends a replay for the session release request to the printing service 504.

After the printing service 504 receives the stored document from the document management service 503, the process control moves to step S127 in FIG. 26.

At step S127, the printing service 504 requests ECS 35 to print the stored document and receives the printing result from the ECS 35. Then, the process control moves to step S128.

At step S128, the printing service 504 sends the received printing result to the network device 501 and then terminates the process thereof.

According to the above-mentioned access authentication information generation method, a session setting request includes a document ticket. As a result, it is possible to add an authenticated document ID in the document ticket to session information of a subsequent session without further password authentication.

In addition, according to the above-mentioned access authentication information generation method, once a password is successfully authenticated for a stored document, the authenticated document ID is added in an authenticated document ID array of session information of a session established between the document management service 503 and the printing service 504 via a document ticket. As a result, the printing service 504 can print the stored document without repeating password authentication.

Accordingly, once a stored document, which is protected through a password, is authenticated, it is possible to omit password authentication for the next process request for the stored document. As mentioned above, password authentication can be omitted in the above-mentioned access authentication information method. As a result, it is possible to improve the processing speed.

The present invention is not limited to the specifically disclosed embodiments, and variations and modifications may be made without departing from the scope of the present invention.

The present application is based on Japanese Patent Priority Applications No. 2002-236990 filed August 15, 2002, No. 2002-273987 filed September 19, 2002, No. 2002-273986 filed September 19, 2002, the entire contents of which are hereby incorporated by reference.

## Claims

1. An image forming apparatus, comprising:
a hardware set for use for image formation;
a program to be executed for image formation;
document storage means for storing at least one document;
a network service; and
a document management service,
wherein the network service, in response to receipt of an authentication request for a stored document in the document storage means from an external network device, acquires first session information, which is created by the document management service, of a first session established between the network service and the document management service from the document management service, associates the first session information with second session information of a second session established between the network service and the network device, and sends the second session information to the network device, whereas the network service, in response to receipt of a predetermined process request using the second session information from the network device, identifies the first session information corresponding to the second session information, and uses the first session information to fulfill the predetermined process request on the stored document.

2. The image forming apparatus as claimed in claim 1, wherein the network service, in response to receipt of a stored document acquisition request using the second session information from the network device, identifies the first session information corresponding to the second session information, uses the first session information to acquire the stored document corresponding to the stored document acquisition request from the document storage means, and sends the acquired stored document to the network device.

3. The image forming apparatus as claimed in claim 1, wherein the network service, in response to receipt of a stored document acquisition request using the second session information from the network device, identifies the first session information corresponding to the second session information, uses the first session information to acquire the stored document corresponding to the stored document acquisition request from the document management service, and sends the acquired stored document to the network device.

4. The image forming apparatus as claimed in claim 1, wherein the network service, in response to receipt of a stored document acquisition request using the second session information from the network device, identifies the first session information corresponding to the second session information, and uses the first session information to cause the document management service to acquire the stored document corresponding to the stored document acquisition request and to send the acquired stored document to the network device.

5. The image forming apparatus as claimed in claim 1, 2, 3, or 4, wherein the first session information is used within the image forming apparatus.

6. The image forming apparatus as claimed in claim 1, 2, 3, 4, or 5, wherein the network service includes the second session information in display data that the network uses to create a stored document acquisition screen, and send the display data to the network device.

7. The image forming apparatus as claimed in any one of claims 1 to 6, wherein the document management service, in response to receipt of the authentication request from the network service, performs authentication, create the first session information based on a result of the authentication, and send the created first session information to the network service.

8. The image forming apparatus as claimed in any on of claims 1 to 7, wherein the document management service, in response to receipt of the first session information from the network service, determines validity of the first session information.

9. The image forming apparatus as claimed in claim 8, wherein the network service fulfills the predetermined process request on the stored document based on the determined validity of the first session information.

10. The image forming apparatus as claimed in any one of claims 1 to 9, wherein the network service includes the second session information in Web page data that the network device uses to create a Web page for acquiring the stored document, and sends the Web page data to the network device.

11. The image forming apparatus as claimed in claim 2; or any claim dependent thereon, wherein stored document acquisition request comprises the second session information, stored document identification information and document acquirable range information.

12. The image forming apparatus as claimed in Claim 11, wherein the document acquirable range information comprises a format and a page number of the stored document.

13. The image forming apparatus as claimed in claim 6; or any claim dependent thereon, wherein the display area data comprises the second session information, stored document identification information and document acquirable range information.

14. The image forming apparatus as claimed in claim 13, wherein the document acquirable range information comprises a format and page number of the stored document.

15. The image forming apparatus as claimed in any of the preceding claims, wherein the first session information is replaced with access authentication information of the stored document.

16. The image forming apparatus as claimed in any one of the preceding claims, wherein the document management service invalidates the first session information after a predetermined time has passed since creation of the first session information.

17. A method of acquiring a stored document for an image forming apparatus having a hardware set used for image formation, a program executed for image formation, and document storage means for storing at least one document, the method comprising the steps of:
acquiring, in response to an authentication request for a stored document in the document storage means from an external network device, first session information of a first session established within the image forming apparatus;
associating the first session information with second session information of a second session established between the network device and the image forming apparatus, and sending the second session information to the network device;
identifying, in response to receipt of a predetermined process request using the second session information from the network device, the first session information corresponding to the second session information; and
using the first session information to fulfill the predetermined process request on the stored document.

18. A system for acquiring a stored document, comprising:
at least one external network device connected to a network; and
an image forming apparatus connected to the at least one network device via the network, the image forming apparatus comprising: document storage means for storing at least one document; a network service; and a document management service,
wherein the network service, in response to receipt of an authentication request for a stored document in the document storage means from an external network device, acquires first session information of a first session established within the image forming apparatus, associates the first session information with second session information of a second session established between the image forming apparatus and the network device, and sends the second session information to the network device, whereas the network service, in response to receipt of a predetermined process request using the second session information from the network device, identifies the first session information corresponding to the second session information, and uses the first session information to fulfill the predetermined process request on the stored document, and the document management service, in response to the authentication request, creates the first session information of the first session established within the image forming apparatus, and sends the created first session information to the network service.

19. A method of acquiring a stored document for a system comprising: at least one external network device being connected to a network; and an image forming apparatus being connected to the at least one network device via the network, the image forming apparatus having document storage means for storing at least one document, the method comprising:
a first step of acquiring, in response to receipt of an authentication request for a stored document in the document storage means from an external network device, first session information of a first session established within the image forming apparatus;
a second step of associating the first session information with second session information of a second session established between the image forming apparatus and the network device, and sending the second session . information to the network device;
a third step of identifying, in response to receipt of a predetermined process request using the second session information from the network device, the first session information corresponding to the second session information; and
a fourth step of using the first session information to fulfill the predetermined process request on the stored document.

20. The method as claimed in claim 19,
wherein the image forming apparatus performs the first step, the second step, the third step and the fourth step.

21. An image forming apparatus, comprising:
a hardware set for use for image formation;
a program to be executed for image formation;
document storage means for storing at least one document;
a network service; and
a document management service,
wherein the network service, in response to receipt of an authentication request for a stored document in the document storage means from an external network device, acquires session information of a session established between the network service and the document management service, includes the session information in display data that the network device uses to create a stored document acquisition screen, and sends the display data including the session information to the network device, whereas the network service, in response to receipt of a predetermined process request using the session information for the stored document from the network device, uses the session information to fulfill the predetermined process request on the stored document.

22. The image forming apparatus as claimed in claim 21, wherein the network service, in response to receipt of a stored document acquisition request using the session information from the network device after transmission of the session information in the display data to the network device, uses the session information to acquire a stored document corresponding to the stored document acquisition request from the document storage means, and sends the acquired stored document to the network device.

23. The image forming apparatus as claimed in claim 21, wherein the network service, in response to receipt of an authentication request for a stored document in the document storage means from network device, performs authentication corresponding to the authentication request, creates session content information and session identification information based on a result of the authentication, includes the session identification information in the display data, and sends the display data including the session identification information to the network device..

24. The image forming apparatus as claimed in claim 21, wherein the network service, in response to receipt of a predetermined process request using the session identification information for a stored document in the document storage means from the network device, identifies the session content information corresponding to the session identification information, and uses the session content information to fulfill the predetermined process request on the stored document.

25. The image forming apparatus as claimed in claim 24, wherein the network service, in response to receipt of the predetermined process request using the session identification information for the stored document in the document storage means from the network device, identifies the session content information corresponding to the session identification information, and determines whether or not the predetermined process request is valid for the stored document based on the session content information.

26. The image forming apparatus as claimed in claim 21, 22, 23, 24 or 25 wherein the predetermined process request comprises session information, stored document identification information and document acquirable range information.

27. The image forming apparatus as claimed in claim 26, wherein the document acquirable range information comprises a format and a page number of the stored document.

28. The image forming apparatus as claimed in any one of claims 21 to 27, wherein the display data comprises session information, stored document identification information and documents acquirable range information.

29. The image forming apparatus as claimed in claim 28, wherein the document acquirable range information comprises a format and a page number of the stored document.

30. The image forming apparatus as claimed in any one of claims 21 to 27, wherein the session information is invalidated after a predetermined time has passed since creation of the session information.

31. The image forming apparatus as claimed in any one of claims 21 to 27, wherein the network service includes the session information in Web page data that the network device uses to create a Web page for processing a stored document, and sends the Web page data to the network device.

32. The image forming apparatus as claimed in claim 31, wherein the Web page data are described in accordance with HTML (Hypertext Markup Language).

33. An image forming apparatus, comprising:
a hardware set for use for image formation;
a program to be executed for image formation;
document storage means for storing at least one document;
a network service; and
a document management service,
wherein the network service, in response to receipt of an authentication request for a stored document in the document storage means and document acquisition condition information thereon from an external network device, acquires session information of a session established within the image forming apparatus, and uses the session information and the document acquisition condition to fulfill a predetermined process request on the stored document.

34. A method of processing a stored document for an image forming apparatus having a hardware set used for image formation, a program executed for image formation, and document storage means for storing at least one document, the method comprising the steps of:
acquiring, in response to receipt of an authentication request for a stored document in the document storage means from an external network device, session information of a session established within the image forming apparatus, including the session information in display data that the network device uses to create a stored document processing screen, and sending the display data to the network device; and
using, in response to receipt of a predetermined process request using the session information for the stored document from the network device, the session information to fulfill the predetermined process request on the stored document.

35. A method of processing a stored document for an image forming apparatus having a hardware set used for image formation, a program executed for image formation, and document storage means for storing at least one document, the method comprising the steps of:
acquiring, in response to receipt of an authentication request for a stored document in the document storage means and document acquisition condition information thereon from an external network device, session information of a session established within the image forming apparatus; and
using the session information and the document acquisition condition to fulfill the predetermined process request on the stored document.

36. A system of processing a stored document, comprising:
at least one external network device connected to a network; and
an image forming apparatus connected to the at least one network device via the network, the image forming apparatus comprising: a hardware set used for image formation; a program executed for image formation, and document storage means for storing at least one document,
wherein the image forming apparatus, in response to receipt of an authentication request for a stored document in the document storage means from an external network device, acquires session information of a session established within the image forming apparatus, includes the session information in display data that the network device uses to create a stored document processing screen, and sends the display data to the network device; the network device acquires the session information from the received display data, and sends a predetermined process request using the session information to the image forming apparatus in accordance with a user's instruction; and the image forming apparatus, in response to receipt of the predetermined process request using the session information from the network device, uses the session information to fulfill the predetermined process request on the stored document.

37. A system of processing a stored document, comprising:
at least one external network device connected to a network; and
an image forming apparatus connected to the at least one network device via the network, the image forming apparatus comprising: a hardware set used for image formation, a program executed for image formation, and document storage means for storing at least one document,
wherein the image forming apparatus, in response to an authentication request for a stored document in the document storage means and document acquisition condition information thereon from an external network device, acquires session information of a session established within the image forming apparatus, and uses the session information and the document acquisition condition information to fulfill the predetermined process request on the stored document.

38. A method of processing a stored document for a system comprising: at least one external network device being connected to a network; and an image forming apparatus being connected to the at least one network device via the network, the image forming apparatus comprising: a hardware set used for image formation; a program executed for image formation; and document storage means for storing at least one document, the method comprising:
a first step of acquiring, in response to an authentication request for a stored document in the document storage means from an external network device, session information of a session established within the image forming apparatus, including the session information in display data that the network device uses to create a stored document processing screen, and sending the display data including the session information to the network device;
a second step of acquiring the session information from the received display data and sending a predetermined process request using the session information fro the stored document to the image forming apparatus in accordance with a user's instruction; and
a third step of using, in response to receipt of the predetermined process request using the session information for the stored document from the network device, the session information to fulfill the predetermined process request for the stored document.

39. The method as claimed in claim 38, wherein the image forming apparatus performs the first step and the third step, and the network device performs the second step.

40. A method of processing a stored document for a system comprising: at least one external network device being connected to a network; and an image forming apparatus being connected to the at least one network device via the network, the image forming apparatus comprising: a hardware set used for image formation; a program executed for image formation; and document storage means for storing at least one document, the method comprising:
a first step of acquiring, in response to an authentication request for a stored document In the document storage means and document acquisition condition information thereon from an external network device, session information of a session established within the image forming apparatus; and
a second step of using the session information and the document acquisition condition information to fulfill the predetermined process request for the stored document.

41. The method as claimed in claim 40, wherein the image forming apparatus performs the first step and the second step.

42. An image forming apparatus, comprising:
a hardware set for use for image formation;
a program to be executed for image formation; and
a network service, in response to receipt of a session setting request including authentication information from an external network device, performing authentication based on the session setting request, creating session information of a session established between the network service and the network device and session identification information to identify the session information, and sending the session identification information to the network device, whereas the network service, in response to receipt of a predetermined process request using the session identification information from the network device, determining the session information corresponding to the session identification information, and fulfilling the predetermined process request based on the session information.

43. The image forming apparatus as claimed in claim 42, wherein the network service, in response to the predetermined process request using the session identification information from the network device, determines whether or not the session information corresponding to the session identification information exists, and when the session information exists, then the network service fulfills the predetermined process request based on the session information.

44. The image forming apparatus as claimed in claim 42, wherein the session information comprises session identification information, identification information of the network device that sends the session setting request, and identification information of the image forming apparatus that receives the session setting request.

45. The image forming apparatus as claimed in claim 44 , wherein the network service determines the session information corresponding to the session identification information, and when the identification information of the network device that sends the session setting request, which is included in the session information, and the identification information of the network device that sends the predetermined process request are the same, then the network service fulfills the predetermined process request.

46. The image forming apparatus as claimed in claim 42, wherein the network service, in response to receipt of the predetermined process request using the session identification information from the network device, determines the session information corresponding to the session identification information, and fulfills the predetermined process request within an access range authorized based on the authentication information corresponding to the session information.

47. An image forming apparatus, comprising;
a hardware set for use for image formation;
a program to be executed for image formation;
document storage means for storing at least one document; and
a document management service, in response to receipt of a session setting request including authentication information from an external network device, creating session information of a session established between the document management service and the network device and session identification information to identify the session information based on the session setting request, and sending the session identification information to the network device, whereas the document management service, in response to receipt of an authentication request using the session identification information for a stored document in the document storage means from the network device, determining the session information corresponding to the session identification information, creating access authentication information for the stored document based on the session information, and sending the created access authentication information to the network device.

48. The image forming apparatus as claimed in claim 47, wherein the document management service, in response to receipt of the authentication request using the session identification information for the stored document from the network device, determines whether or not the session information corresponding to the session identification information exists, and when the session information exists, the document management service creates the access authentication information for the stored document based on the session information and sends the created access authentication information to the network device.

49. The image forming apparatus as claimed in claim 47 or 48, wherein the session information comprises session identification information, identification information of the network device that sends the session setting request, identification information of the image forming apparatus that receives the session setting request, and identification information of the authenticated stored document.

50. The image forming apparatus as claimed in claim 49, wherein the document management service determines the session information corresponding to the session identification information, and when the identification information of the network device that sends the session setting request, which is included in the session information, and the identification information of the network device that sends the authentication request for the stored document are the same, the document management service creates access authentication information for the stored document and sends the access authentication information to the network device.

51. The image forming apparatus as claimed in claim 50 wherein the document management service, when identification information of the stored document corresponding to the authentication request is included in the identification information of the authenticated stored document, which is included in the session information, issues access authentication information to the stored document without authentication for the stored document.

52. The image forming apparatus as claimed in claim 50 or 51, wherein the document management service, when identification information of the stored document corresponding to the authentication request is not included in the identification information of an authenticated stored document in the session information, performs authentication on the stored document, adds a result of the authentication to the identification information of an authenticated stored document, and issues access authentication information on the stored document.

53. The image forming apparatus as claimed in any one of claims 47 to 52, wherein the document management service, in response to receipt of the stored document acquisition request using the session identification information from the network device, determines the session information corresponding to the session identification information, and sends the stored document corresponding to the stored document acquisition request to the network device

54. A method of generating access authentication information for an image forming apparatus comprising a hardware set used for image formation and a program executed for image formation, the method comprising the steps of:
creating, in response to a session setting request including authentication information from an external network device, session information of a session established between the image forming apparatus and the network device and session identification information to identify the session information based on the session, setting request, and sending the session identification information, which is used as access authentication information for a predetermined process, to the network device; and
determining, in response to receipt of a predetermined process request using the session identification information from the network device, the session information corresponding to the session identification information, and fulfilling the predetermined process request from the network device based on the session information.

55. A method of generating access authentication information for an image forming apparatus comprising a hardware set used for image formation and a program executed for image formation, the method comprising the steps of:
creating, in response to a session setting request including authentication information from an external network device, session information of a session established between the image forming apparatus and the external network device and session identification information to identify the session information based on the session setting request, and sending the session identification information, which is used as access authentication information for a predetermined process, to the network device; and
creating, in response to receipt of an authentication request using the session identification information for a stored document in the image forming apparatus from the network device, determining the session information corresponding to the session identification information, creating access authentication information for the stored document based on the session information, and sending the access authentication information to the network device.

56. A system of generating access authentication information for a predetermined process, the system comprising:
at least one external network device connected to a network; and
an image forming apparatus connected to the at least one external network device via the network, the image forming apparatus, in response to receipt of a session setting request including authentication information from an external network device, creating session information of a session established between the image forming apparatus and the network device and session identification information to identify the session information based on the session setting request, and sending the session identification information, which is used as access authentication information for a predetermined process, to the external network device, whereas the image forming apparatus, in response to a predetermined process request using the session identification information from the network device, determining the session information corresponding to the session identification information, and fulfilling the predetermined process request based on the session information.

57. A system of generating access authentication information for a predetermined process, the system comprising:
at least one network device connected to a network; and
an image forming apparatus connected to the at least one external network device via the network, the image forming apparatus, in response to receipt of a session setting request including authentication information from an external network device, creating session information of a session established between the image forming apparatus and the network device and session identification information to identify the session information based on the session setting request, and sending the session identification information, which is used as access authentication information for a predetermined process, to the network device, whereas the image forming apparatus, in response to receipt of an authentication request using the session identification information for a stored document in the image forming apparatus from the network device, determining the session information corresponding to the session identification information, creating access authentication information for the stored document based on the session information, and sending the access authentication information to the network device.

58. An image forming apparatus, comprising:
a hardware set for use for image formation;
a program to be executed for image formation; and
a document management service for, in response to receipt of an authentication request for a predetermined process from a first external network device, performing authentication based on the authentication request, creating access authentication information for the predetermined process and access authentication identification information to identify the access authentication information based on a result of the authentication, and sending the access authentication identification information to the first network device, whereas the document management service, in response to receipt of a session setting request including the access authentication identification information from a second external network device, determining the access authentication information corresponding to the access authentication identification information, storing the access authentication information in session information of a session established between the document management service and the second network device based on the session setting request, and sending session identification information to identify the session to the second network device.

59. The image forming apparatus as claimed in claim 58, wherein the document management service, in response to a predetermined process request using the session identification information from the second network device, determines the session information corresponding to the session, identification information, and fulfills the predetermined process request based on the access authentication information stored in the session information.

60. The image forming apparatus as claimed in claim 58 or 59, wherein the access authentication information comprises access authentication identification information and authenticated process information on a process that is authenticated in accordance with the authentication.

61. The image forming apparatus as claimed in claim 60, wherein the session information comprises session identification information, identification information of the second network device that sends the session setting request, identification information of the image forming apparatus that receives the'session setting request, and the authenticated process information.

62. The image forming apparatus as claimed in claim 61, wherein the document management service, when said document management service, in response to receipt of the session setting request including the access authentication identification information from the second network device, determines the access authentication information corresponding to the access authentication identification information and stores the access authentication information in the session information of the session established between the document management service and the second network device, further adds the authenticated process information included in the access authentication information to the authenticated process information included in the session information.

63. The image forming apparatus as claimed in claim 62, wherein the document management service, in response to receipt of a predetermined process request using the session identification information from an external network device, determines the session information corresponding to the session identification information, and when the predetermined process is included in the authenticated process information of the session information and further identification information of the second network device that sends the session setting request included in the session information and identification information of the network device that sends the predetermined process request are the same, the document management service fulfills the predetermined process request. corresponding to the session identification information.

64. The image forming apparatus as claimed in any one of claims 58 to 65, wherein the second network device receives access authentication information from the first network device.

65. An image forming apparatus, comprising:
a hardware set for use for image formation;
a program to be used for image formation;
document storage means for storing at least one document; and
a document management service for, in response to receipt of an authentication request for a stored document in the document storage means from a first external network device, performing authentication based on the authentication request, creating access authentication information for the stored document and access authentication identification information to identify the access authentication information based on a result of the authentication, and sending the access authentication identification information to the first network device, whereas the document management service, in response to receipt of a session setting request including the access authentication identification information from a second external network device, determining the access authentication information.
corresponding to the access authentication identification information, storing the access authentication information in session information of a session established between the document management service and the second network device, and sending session identification information to identify the session to the second network device.

66. The image forming apparatus as claimed in claim 65, wherein the document management service, in response to a predetermined process request using the session identification information for the stored document from the second network device, determines the session information corresponding to the session identification information, and fulfills the predetermined process request based on the access authentication information in the session information.

67. The image forming apparatus as claimed in claim 65 or 66, wherein the access authentication information comprises access authentication identification information and identification information of a stored document that is authenticated in accordance with the authentication.

68. The image forming apparatus as claimed in claim 67, wherein the session information comprises session identification information, identification information of the second network device that sends the session setting request, identification information of the image forming apparatus that receives the session setting request, and identification information of the authenticated stored document.

69. The image forming apparatus as claimed in claim 68, wherein the document management service, when the document management service, in response to receipt of the session setting request including the access authentication identification information for the stored document in the document storage means from the second network device, determines the access authentication information corresponding to the access authentication identification information and stores the access authentication information in the session information of the session established between the document management service and the second network device based on the session setting request, further adds the identification information of the authenticated stored document included in the access authentication information to the identification information of the authenticated stored document included in the session information.

70. The image forming apparatus as claimed in claim 69 , wherein the document management service, in response to receipt of a predetermined process request using the session identification information for a stored document in the document storage means from a network device, determines the session information corresponding to the session identification information, . and when identification information of the stored document is included in the session information and further the identification information of the second network device that sends the session setting request and the identification information of the network device that sends the predetermined process request are the same, the document management service fulfills the predetermined process request for the stored document.

71. The image forming apparatus as claimed in any one of claims 42 to 53 or 58 to 70, wherein the session information comprises an expiration time, and the session information is deleted after the expiration time thereof passes.

72. The image forming apparatus as claimed in claim 71, wherein the document management service, in response to receipt of a predetermined process request using the session identification information, updates the expiration time of the session information corresponding to the session identification information.

73. The image forming apparatus as claimed in claim 78, wherein the predetermined process request is related to image formation.

74. The image forming apparatus as claimed in any one of claims 1 to 16, 21 to 33, 42 to 53 or 58 to 73, wherein the hardware set comprises:
scanner means for generating image data from an image; and
plotter means for forming an image from image data.

75. The image forming apparatus as claimed in claim 65 , wherein the second network device receives the access authentication identification information from the first network device.

76. A method of generating access authentication information for an image forming apparatus having a hardware set used for image formation and a program executed for image formation, the method comprising the steps of:
performing, in response to receipt of an authentication request for a predetermined process from a first external network device, authentication based on the authentication request, creating access authentication information for the predetermined process and access authentication identification information to identify the access authentication information based on a result of the authentication, and sending the access authentication identification information to the first network device; and
determining, in response to receipt of a session setting request including the access authentication identification information from a second external network device, the access authentication information corresponding to the access authentication identification information, storing the access authentication information in session information of a session established between the image forming apparatus and the second network device based on the session setting request, and sending session identification information to identify the session to the second network device.

77. A method of generating access authentication information for an image forming apparatus having a hardware set used for image formation, a program executed for image formation and document storage means for storing at least one document, the method comprising the steps of:
performing, in response to receipt of an authentication request for a stored document in the document storage means from a first external network device, authentication.based on the authentication request, creating access authentication information for the stored document and access authentication identification information to identify the access authentication information based on a result of the authentication, and sending the access authentication identification information to the first network device; and
determining, in response to receipt of a session setting request including the access authentication identification information from a second external network device, the access authentication information corresponding to the access authentication identification information, storing the access authentication information in session information of a session established between the image forming apparatus and the second network device based on the session setting request, and sending session identification information to identify the session to the second network device.

78. A system of generating access authentication information for a predetermined process, the system comprising:
at least one external network device being connected to a network; and
an image forming apparatus being connected to the at least one external network device via the network, the image forming apparatus, in response to receipt of an authentication request for a predetermined process from a first external network device, performing authentication based on the authentication request, creating access authentication information for the predetermined process and access authentication identification information to identify the access authentication information based on a result of the authentication, and sending the access authentication identification information to the first network device, whereas the image forming apparatus, in response to receipt of a session setting request including the access authentication identification information from a second external network device, determining the access authentication information corresponding to the access authentication identification information, storing the access authentication information in session information of a session established between the image forming apparatus and the second network device based on the session setting request, and sending session identification information to identify the session to the second network device.

79. A system of generating access authentication information for a predetermined process, the system comprising:
at least one external network device being connected to a network;
an image forming apparatus being connected to the at least one external network device via the network, the image forming apparatus, in response to receipt of an authentication request for a stored document in the image forming apparatus from a first external network device, performing authentication based on the authentication request, creating access authentication information for the stored document and access authentication identification information to identify the access authentication information based on a result of the authentication, and sending the access authentication identification information to the first network device, whereas the image forming apparatus, in response to receipt of a session setting request including the access authentication identification information from a second external network device, determining the access authentication information corresponding to the access authentication identification information, storing the access authentication information in session information of a session established between the image forming apparatus and the second network device based on the session setting request, and sending session identification information to identify the session to the second network device.
